# EUROPEAN PATENT SPECIFICATION

(11) **EP 1 926 329 B1**
(45) Date of publication and mention of the grant of the patent: **06.10.2010**
(21) Application number: 06124738.3
(22) Date of filing: 24.11.2006
(51) Int. Cl.: H04W 4/06

(54) **File repair method for MBMS and UMTS network**
Dateireparaturverfahren für MBMS- und UMTS-Netzwerk
Procédé de réparation de fichiers pour réseau MBMS et UMTS

(43) Date of publication of application: 28.05.2008
(73) Proprietor: Industrial Technology Research, Chutung Hsinchu (TW)
(72) Inventor: Lai Yen Cheng, 231, Sindian City (TW); Chang, Lu-Tsung, Taichung City 401, Taiwan (R.O.C) (TW); Lin, Phone, Tainan City 701, Taiwan (R.O.C) (TW); Lin, Jason Yi-Bing, 308, Baoshan Township (TW)
(74) Representative: Reichert, Werner Franz

(56) References cited:
- WO-A-03/019828
- WO-A-2005/101752
- US-A1- 2005 216 812
- "Universal Mobile Telecommunications System (UMTS); Multimedia Broadcast/Multicast Service (MBMS); Architecture and functional description (3GPP TS 23.246 version 6.8.0 Release 6)" ETSI STANDARDS, EUROPEAN TELECOMMUNICATIONS STANDARDS INSTITUTE, SOPHIA-ANTIPO, FR, vol. 3-SA2, no. V680, September 2005 (2005-09), XP014031874 ISSN: 0000-0001
- "3rd Generation Partnership Project; Technical Specification Group Services and System Aspects; Multimedia Broadcast/Multicast Service (MBMS); Protocols and codecs (Release 6)" 3GPP TS 26.346 V6.4.0, March 2006 (2006-03), page complete, XP002397877
- BAKHUIZEN, M. ET AL: "Mobile broadcast/multicast in mobile networks" ERICSSON REVIEW, [Online] no. 1, 2005, pages 1-8, XP002431868 Retrieved from the Internet: URL:http://www.ericsson.com/ericsson/corpi nfo/publications/review/2005_01/files/2005 015.pdf> [retrieved on 2007-05-02]

## Description

The present invention relates to a file repair method for Multimedia Broadcast Multicast Service (MBMS). More particularly, the present invention relates to a file repair method for MBMS which is applicable to a Universal Mobile Telecommunications System (UMTS) network

The multicasting technique (one-source-many-destination) is widely utilized for multimedia content delivery in the Internet. In the recent years, mobile telecommunication networks have been integrated with the Internet, and the Third Generation Partnership Project (3GPP) proposed the Multimedia Broadcast Multicast Service (MBMS) for multicasting multimedia content over the Universal Mobile Telecommunications System (UMTS), so as to save network resources on the core network and radio access network.

The document "Technical Specification Group Services and System Aspects"; Multimedia Broadcast/Multicast Service (MBMS); architecture and functional description; (3GPP TS 23.346 version 6.8.0 Release 6); Sophia Antipolis, France; September 2005 describes the protocols and codecs for the globes system for mobile communication. There is provided a Multimedia Broadcast/Multicast Service (MBMS) which multicasts multimedia contents to mobile devices through the Universal Mobile Telecommunications System (UMTS). When multimedia contents are transmitted to the users in the multicast mechanism, data loss or data corruption may occur due to network congestion or poor signal quality.

The document "Universal Mobile Telecommunications System (UMTS)" Technical Specification Group Services and System Aspects; Multimedia Broadcast/Multicast Service (MBMS); protocols and codecs 3GPP TS 23.346 V6.4.0 (2006-03) describes the architecture and the functional description for the MBMS Bearer Service. Three file repair mechanisms: unicast repair mechanism, multicast repair mechanism using the original MBMS bearer service and multicast repair mechanism using a new MBMS bearer service are provided.

The MBMS system architecture based on the UMTS packet-switched service domain, including a Broadcast Multicast-Service Center (BM-SC) and a plurality of network nodes such as Gateway GPRS Support Nodes (GGSN), Serving GPRS Support Nodes (SGSN), and Radio Network Controllers (RNC). Wherein the BM-SC is connected to one or more GGSN, and the GGSN connected to the BM-SC is the downstream node of the BM-SC. Each GGSN is connected to one or more SGSN, and the SGSN connected to the GGSN is the downstream node of the GGSN. Each SGSN is connected to RNCs of the corresponding routing areas, and the RNCs in the routing areas are considered the downstream nodes of the SGSN. To improve the efficiency of the MBMS content transmission, 3GPP defines an MBMS Bearer Service to maintain the optimal delivery path of data transmission. The MBMS Bearer Service defines two context structures, MBMS Bearer Context and MBMS UE Context, stored in all network nodes involved in data transmission between the BM-SC and user equipments. Wherein MBMS Bearer Context describes the MBMS Bearer Service-specific information, such as multicast addresses, quality of service, and a list of the downstream nodes to which the current network node will transmit the MBMS content; while the MBMS UE Context stores the related information of a user equipment, which is created through the MBMS Multicast Service Activation procedure.

However, when an MBMS file is multicasted by the BM-SC to the user equipments, data loss or data corruption may occur due to bad wireless channel condition, network traffic congestion, or user mobility. Presently, the file repair mechanisms for MBMS specified by 3GPP can be categorized into unicast repair mechanism an d multicast repair mechanism When the user equipment held by a user confirms that the BM-SChas completed transmitting the file, the user equipment checks whether there is data loss or corruption in the MBMS file. If so, after a particular delay time, the user equipment sends a repair request message to the BM-SC through a TCP session. The repair request message is encapsulated by the HyperText Transfer Protocol (HTTP) GET method. The delay time is to prevent that many repair request messages are sent to the BM-SC at the same time. The BM-SC transmits the repair data requesting by the user equipment through unicast repair mechanism or multicast repair mechanism.

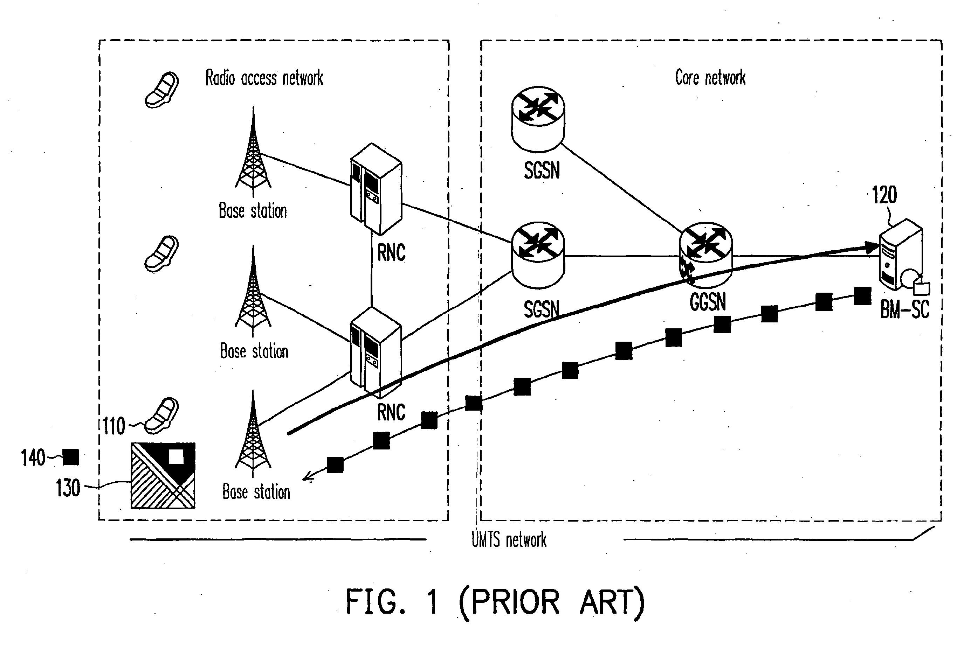

According to unicast repair mechanism, once the BM-SC receives a repair request message sent by the user equipment, the BM-SC replies a repair response message with the requested repair data to achieve the purpose of file repair. Referring to FIG. 1, after the user equipment 110 confirms that the BM-SC 120 has completed transmitting the file and finds a repair block 140 is lost by checking the received data file 130, the user equipment 110 sends a repair request message to the BM-SC 120. After receiving the repair request message, the BM-SC 120 sends the repair response message with the repair block 140 requesting by the user equipment 110 back to the user equipment 110, so as to complete the operation of file repair.

According to the multicast repair mechanism, after the BM-SC receives the repair request message, the BM-SC sends the repair response message with the Uniform Resource Identifier (URI) of a session description file (containing the bearer service information for transmitting repair blocks) back to the user equipment to notify the user equipment that the BM-SC will multicast the repair blocks to the user equipment in which MBMS Bearer Service. In the multicast repair mechanism, the BM-SC can determine whether to multicast the repair block to the user equipment in the original MBMS Bearer Service for file downloading or to request the user equipment to join another MBMS multicast group for receiving the repair block.

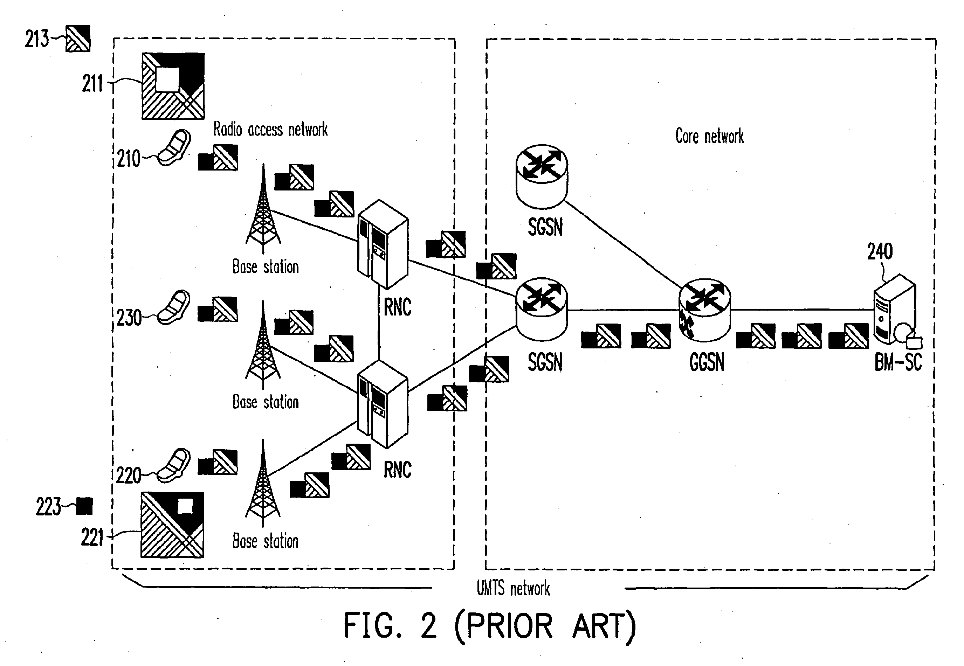

FIG. 2 is a diagram illustrating the multicast repair mechanism wherein an original MBMS Bearer Service for file downloading is used for sending repair blocks. After the user equipments 210, 220, and 230 have confirmed that the BM-SC 240 has completed transmitting the file, the user equipments 210 and 220 send repair request messages to the BM-SC 240 to notify the BM-SC 240 that the required data are repair block 213 and repair block 223 by checking the received data file 211 and data file 221, respectively. After a delay time, the BM-SC 240 starts to transmit the repair blocks 213 and 223 to all the user equipments through the MBMS Bearer Service established previously. Thus, the user equipment 230 also receives the repair blocks 213 and 223 that have been previously correctly received, and the user equipment 210 receives the unrequested repair block 223, similarly, the user equipment 220 receives the unrequested repair block 213.

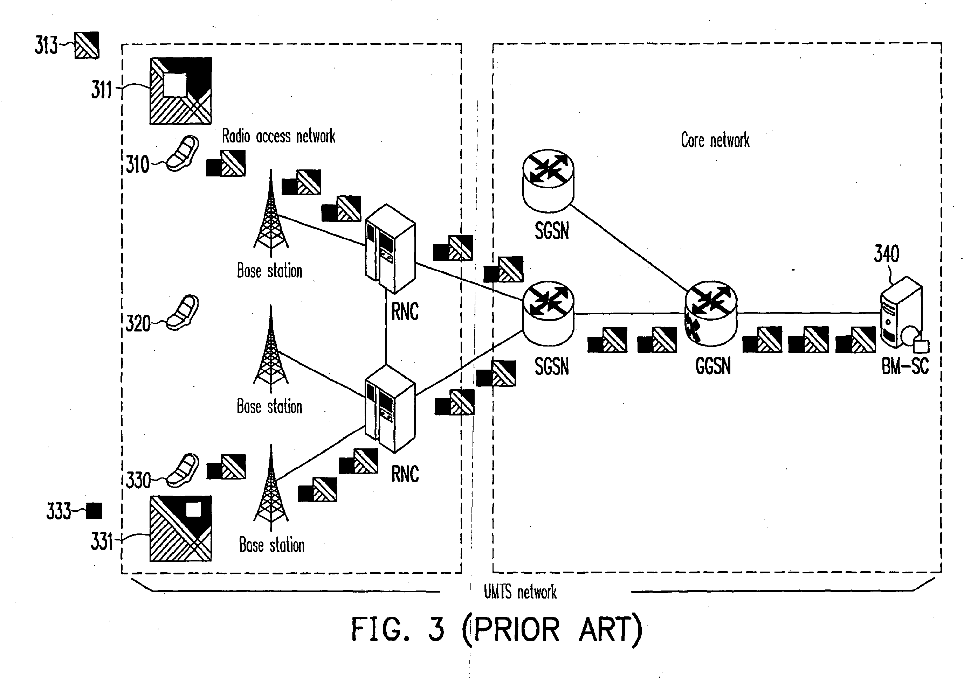

FIG. 3 is a diagram illustrating the multicast repair mechanism wherein a new MBMS Bearer Service is used for sending repair blocks. After the user equipments 310, 320, and 330 confirms that the BM-SC 340 has completed transmitting the file. The user equipments 310 and 330 find that there are data loss by checking the MBMS files 311 and 331, respectively, and then send repair request messages to the BM-SC 340 to request the repair blocks 313 and 333. After receiving the repair request messages, the BM-SC 340 notifies the user equipments 310 and 330 in the repair response message that the repair blocks will be transmitted in another MBMS Bearer Service. Then the user equipments 310 and 330 have to use MBMS Multicast Service Activation procedure to join the new MBMS multicast group. After a particular delay time, the BM-SC 340 executes an MBMS Session Start procedure to establish all the bearer resources between the BM-SC 340 and the user equipments 310, 330. After establishing the bearer resources, the BM-SC 340 starts to transmit the repair blocks. In this file repair mechanism, the BM-SC 340 does not send the repair blocks (that have been previously correctly received) to the user equipment 320. However, the user equipments 310 and 330 still receive unrequested repair block.

As described above, while using unicast repair mechanism, the repair data is individually unicasted to the user equipment, and when a plurality of user equipments require the same data, the multiple copies of repair data are transmitted many times in the core network. In the multicast repair mechanism using original MBMS Bearer Service for file downloading, the data required by user equipment is multicasted to all the user equipments through the original MBMS Bearer Service for file downloading. Hence, it imposes unnecessary user equipment processing overhead and introduces unnecessary repair data transmission in the UMTS network. In addition, according to the multicast repair mechanism through new MBMS Bearer Service, all the user equipments that request repair blocks are required to join another MBMS multicast group, and the repair data is transmitted within the new MBMS Bearer Service, so that only those user equipments in the new MBMS group receive the repair data and network resources can be saved greatly. However, the user equipment has to spend a lot of signaling to join the new MBMS Bearer Service in this mechanism. All the three mechanisms described above may introduce extra network traffic and signal overheads in the UMTS network.
It is an object of the invention to provide a file repair method for Multimedia Broadcast Multicast Service (MBMS) which is applicable to a Universal Mobile Telecommunications System (UMTS) network, wherein unnecessary user equipment processing overhead and unnecessary repair data transmission in the UMTS network are not required. In addition, only those user equipments in the MBMS group, which require repair blocks, receive the repair data. A as a consequence network resources can be saved greatly. Additionally, all extra network traffic which increases signal overhead in the UMTS network should be reduced.

The above object is solved by a method for Multimedia Broadcast Multicast Service (MBMS) with the steps claimed in claim 1.

It is a further object of the invention to provide a Universal Mobile Telecommunications System (UMTS) network, wherein unnecessary user equipment processing overhead and unnecessary repair data transmission in the UMTS network are not required. In addition, only those user equipments in the MBMS group, which require repair blocks, receive the repair data. A as a consequence network resources can be saved greatly. Additionally, all extra network traffic which increases signal overhead in the UMTS network should be reduced.

The above object is solved by a Universal Mobile Telecommunications System (UMTS) network with the features claimed in claim 4.

An additional object of the invention is to provide a file repair method for Multimedia Broadcast Multicast Service (MBMS) which is applicable to a Universal Mobile Telecommunications System (UMTS) network, wherein unnecessary user equipment processing overhead and unnecessary repair data transmission in the UMTS network are not required. In addition, only those user equipments in the MBMS group, which require repair blocks, receive the repair data. A as a consequence network resources can be saved greatly. Additionally, all extra network traffic which increases signal overhead in the UMTS network should be reduced.

The above object is solved by a method for Multimedia Broadcast Multicast Service (MBMS) with the steps as claimed in claim 7.

A further object of the invention is to provide a Universal Mobile Telecommunications System (UMTS) network, wherein unnecessary user equipment processing overhead and unnecessary repair data transmission in the UMTS network are not required. In addition, only those user equipments in the MBMS group, which require repair blocks, receive the repair data. A as a consequence network resources can be saved greatly. Additionally, all extra network traffic which increases signal overhead in the UMTS network should be reduced.

The above object is solved by a Universal Mobile Telecommunications System (UMTS) network with the features claimed in claim 8.

The accompanying drawings are included to provide a further understanding of the invention, and are incorporated in and constitute a part of this specification. The drawings illustrate embodiments of the invention and, together with the description, serve to explain the principles of the invention.

FIG. 1 is a diagram illustrating the unicast repair mechanism of Multimedia Broadcast Multicast Service (MBMS).

FIG. 2 is a diagram illustrating the multicast repair mechanism wherein an original MBMS Bearer Service for file downloading is used for sending repair blocks.

FIG. 3 is a diagram illustrating the multicast repair mechanism wherein a new MBMS Bearer Service is used for sending repair blocks.

FIG. 4 is a flowchart illustrating the file repair method for MBMS according to an embodiment of the present invention.

FIG. 5 is a flowchart illustrating an implementation of the file repair method for MBMS according to an embodiment of the present invention.

FIG. 6 is a flowchart illustrating a user equipment sending a file repair request message to a Broadcast Multicast-Service Center (BM-SC).

FIG. 7 is a flowchart illustrating establishing a data structure through MBMS Session Start procedure.

FIG. 8 is a diagram of a Universal Mobile Telecommunications System (UMTS) network according to an embodiment of the present invention.

FIG. 9 is a flowchart illustrating data structure deletion according to an embodiment of the present invention.

FIG. 10 is a flowchart illustrating updating a routing area and modifying the data structure of a network node according to an embodiment of the present invention.

FIG. 11 is a diagram of a UMTS network according to an embodiment of the present invention.

FIG. 12 is a flowchart illustrating another implementation of the file repair method for MBMS according to an embodiment of the present invention.

FIG. 13 is a diagram of a UMTS network according to an embodiment of the present invention.

FIG. 14 is a flowchart illustrating updating a routing area and modifying the CRT of a network node according to an embodiment of the present invention.

FIG. 15 is a diagram of a UMTS network according to an embodiment of the present invention.

These and other exemplary embodiments, features, aspects, and advantages of the present invention will be described and become more apparent from the detailed description of exemplary embodiments when read in conjunction with accompanying drawings.

According to the present invention, the file repair method for Multimedia Broadcast Multicast Service (MBMS) is a repair method when data loss or data corruption of a user equipment in a Universal Mobile Telecommunications System (UMTS) network occurs during MBMS content transmission due to bad wireless channel condition, network traffic congestion, or user mobility, etc. According to the method, a data structure recording how to transmit repair blocks is established according to a repair request message sent by each user equipment. Based on the data structure, the user equipment won't receive any unrequested repair block.

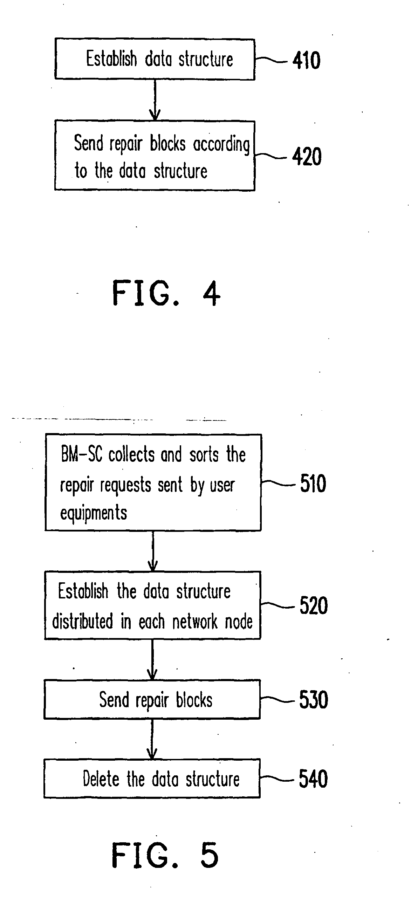

FIG. 4 is a flowchart illustrating the file repair method for MBMS according to an embodiment of the present invention. Referring to FIG. 4, first, a data structure is established according to repair request messages sent by user equipments in the UMTS network. Wherein, the data structure stores a list of downstream nodes to which the current network node will transmit the corresponding repair block. Next, in step 420, the repair blocks are multicasted to the user equipments which require the repair blocks by the Broadcast Multicast-Service Center (BM-SC) of the UMTS network according to the established data structure. Based on the established data structure, the BM-SC won't send unrequested repair block to the user equipment. The present invention will be described in detail with two different methods of establishing the data structure.

When the BM-SC in the UMTS network has finished sending files, each user equipment in the network determines whether there is data loss by cyclic redundancy check. FIG. 5 is a flowchart illustrating an implementation of the file repair method for MBMS according to an embodiment of the present invention. Referring to FIG. 5, when lost file blocks are determined, all the user equipments having lost data send repair request messages to BM-SC. Regarding each repair block, the BM-SC stores which user equipments require the repair block (step 510). According to the TS 26.346 standard specified by 3GPP, the content of a repair request message only shows the required file and the required repair blocks. When BM-SC receives the repair request message, it does not know the identity of the user equipment which issued the request. Thus, a "FROM" header having the format of IMSI@Operator has to be added into the repair request message, wherein IMSI is the International Mobile Subscriber Identity (IMSI) of the user equipment, and Operator is the telecommunication service provider. Accordingly, BM-SC can determine the identity of the user equi pment according to the content of the header.

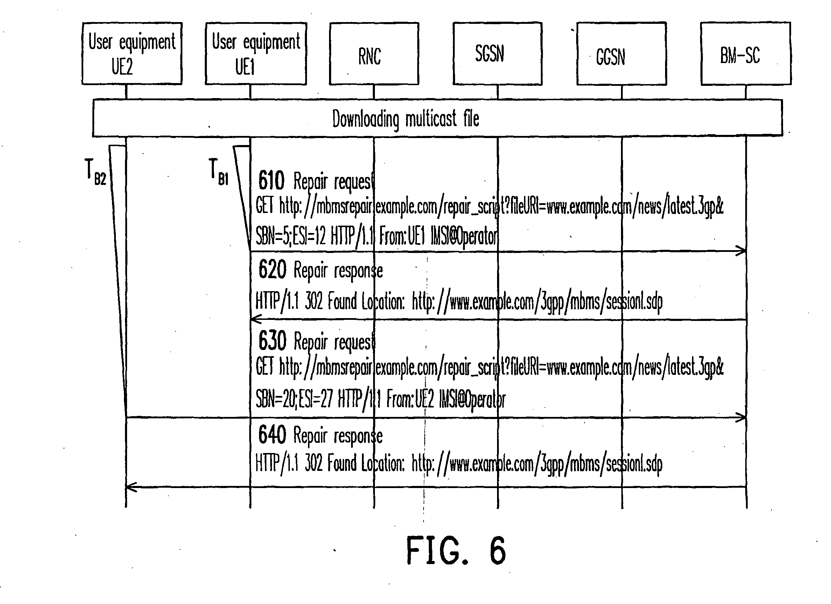

FIG. 6 is a flowchart illustrating a user equipment sending a file repair request message to the BM-SC. In the present embodiment, after MBMS file downloading, the user equipment UE1 waits for a delay time T_{B1} and then sends a repair request message to BM-SC through a plurality of network nodes in the UMTS network (step 610). In the present embodiment, the http://mbmsrepair.example.com/repair script in the repair request message is the address for providing repair service, the file to be repaired is latest.3gp, and the URI thereof is at wvw.example.com/news. The required repair block is located at the 12^{th} Encoding Symbol Identifier (ESI=12) of the 5^{th} Source Block Number (SBN=5), and the IMSI of the user equipment UE1 is denoted in the "FROM" header.

After the BM-SC receives the repair request message sent by the user equipment UE1, the BM-SC stores the IMSI and the information in the repair request message of the user equipment UE1. Then the BM-SC replies a repair response message back to the user equipment UE1 (step 620), which contains the address of the session description to notify the user equipment UE1 of the MBMS Bearer Service to be used for transmitting repair data. After receiving the repair response message, the user equipment UE1 downloads the session description from the specified address. After the user equipment UE1 inspects the content of the session description, the user equipment UE1 identifies that the MBMS Bearer Service used to transmit repair data is the same as the original MBMS Bearer Service for file downloading. Thus, it is not necessary to join another MBMS multicast group. The UE1 waits in the original MBMS Bearer Service for receiving the repair data.

The user equipment UE2 sends a repair request message to the BM-SC after a delay time T_{B2}, in the present embodiment, the repair block required by user equipment UE2 is located at the 27^{th} Encoding Symbol Identifier (ESI=27) of the 20^{th} Source Block Number (SBN=20), and the IMSI of the user equipment UE2 is denoted in the "FROM" header (step 630). After BM-SC receives the repair request message from user equipment UE2, as shown in step 620, BM-SC stores the IMSI of the user equipment UE2 and the repair information in the repair request message. The BM-SC sends the repair response message with the address of the session description back to the user equipment UE2. The user equipment UE2 downloads the session description from the denoted address, and after inspecting the content thereof, UE2 understands that the original MBMS Bearer Service for file downloading is used to transmitting the repair data. Then UE2 waits in the original MBMS Bearer Service for receiving the repair data (step 640).

After BM-SC has collected all the repair request messages and has recorded the user equipments that require repair blocks, BM-SC delivers the repair information to the network nodes involved in file repair in the UMTS network to establish a data structure in each network node (step 520 in FIG. 5). The data structure of each network node includes more than one sub-level data structures, and the sub-level data structures respectively correspond to the repair blocks to be sent to downstream nodes. Each sub-level data structure further includes the identification of the corresponding repair block, a list of downstream nodes responsible for transmitting the repair block, and downstream user equipments requesting the repair block.

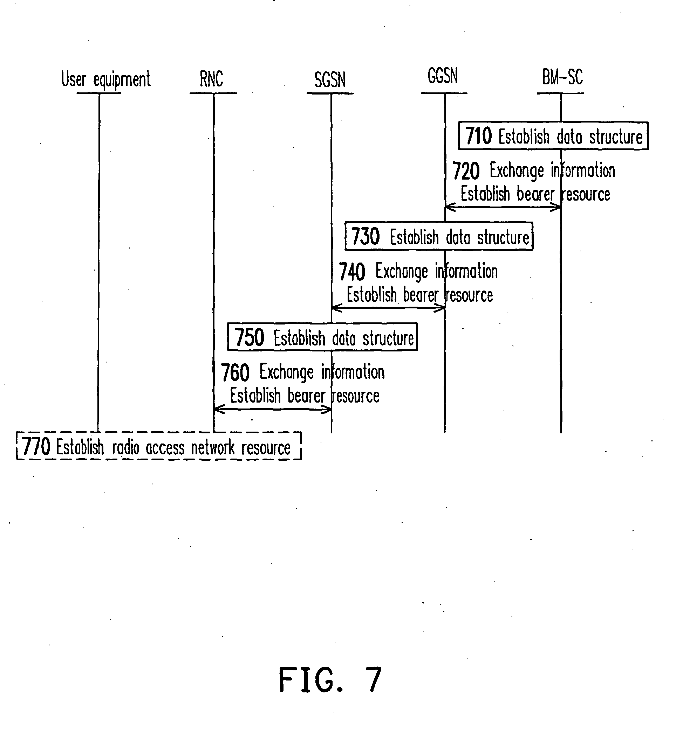

To explain clearly how to establish a data structure distributed in each network node, the following embodiment will be described as an example. FIG. 7 is a flowchart illustrating establishing a data structure through MBMS Session Start procedure. Referring to FIG. 7, in step 710, to determine each repair block should be sent to which GGSNs, BM-SC has to determine that the user equipment is served by which GGSN. However, this information is not contained in the standard specified by 3GPP. Thus, the GGSN used by each of user equipment is recorded by modified MBMS Multicast Service Activation procedure. When the GGSN sends an MBMS authorization request message to the BM-SC, the GGSN used by the user equipment can be obtained and the information is stored in the MBMS UE Context. When establishing the sub-level data structure corresponding to each repair block, the BM-SC checks that each user equipment is served by which GGSN, and then categorizes the user equipments according to different GGSNs, and BM-SC stores the information in the data structure therein.

Next, BM-SC exchanges information with GGSNs that need to send repair blocks to establish the required bearer resources (step 720). Besides, BM-SC sends the related repair information of the GGSN (for example, the information of the repair blocks and the user equipments requiring the repair blocks) to the GGSN.

In step 730, the GGSN obtains the repair information which repair blocks are to be sent and each repair block is required by which user equipments according to the file repair information received from the BM-SC. When establishing the sub-level data structure corresponding to each repair block, the MBMS UE Context stored in the GGSN has to be inquired to find out the SGSNs serving the user equipment. Next, the GGSN categorizes the user equipments according to the SGSNs and stores the result in the data structure of the GGSN. Thus, the GGSN can know precisely that each repair block has to be sent to which SGSNs.

The GGSN exchanges information respectively with the SGSNs which need to sent the repair blocks to establish the required bearer resource (step 740). The GGSN sends the repair information related to each SGSN (for example, the information of the repair blocks and the user equipments requiring the repair blocks) to the SGSN.

In step 750, the SGSN obtains the repair information which repair blocks are to be sent and each repair block is required by which user equipments according to the related information received from the GGSN. When establishing the sub-level data structure corresponding to each repair block, the routing area wherein the user equipment located is obtained by searching the MBMS UE Context stored in the SGSN, and then the user equipments are categorized according to the routing areas and the result is stored in the data structure in the SGSN. Accordingly, the SGSN can understand clearly that each repair block has to be sent to which routing areas.

In step 760, the SGSN determines the repair blocks have to be sent to which routing areas and sends the message to the corresponding RNCs of all the routing areas connected to the SGSN. The field of list of RAs in the message records all the routing areas wherein there are user equipments involved in file repair. Besides, the content stored in the data structure of the SGSN is also carried in the message and is sent to the RNC. After receiving the message, the RNC determines whether the routing area it serves exists in the list of RAs field. If the routing area served by the RNC exists in the list of RAs field, the RNC establishes the required bearer resource and stores the information related to the RNC (for example, information of the repair blocks and the user equipments requiring the repair blocks) in the data structure of the RNC, and then responds to the SGSN. If the served routing area does notexist in the list of RAs field, the RNC ignores the message. Finally, in step 770, the RNC establishes the radio access network resources for transmitting repair data to user equipments.

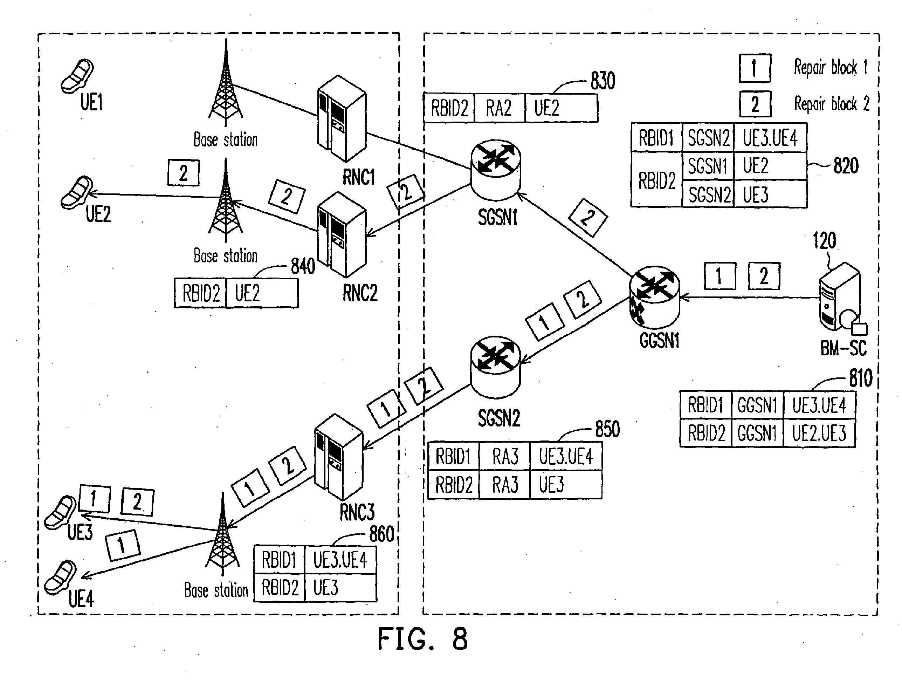

FIG. 8 is a diagram of a UMTS network according to an embodiment of the present invention. In the present embodiment, it is assumed that lost data in file downloading occur to the user equipments UE2, UE3, and UE4. Wherein the user equipment UE2 requires repair block 2, the user equipment UE3 requires repair block 1 and repair block 2, and the user equipment UE4 requires repair block 1. The data structure stored in each network node and established with the foregoing procedure will be explained in detail in the present embodiment.

Referring to FIG. 8, the data structure 810 established and stored in the BM-SC includes two sub-level data structures respectively corresponding to the repair block 1 and the repair block 2. The sub-level data structure corresponding to the repair block 1 records the identification code RBID1 of the repair block 1, the downstream node GGSN1 which needs to send the repair block 1, and the user equipments which request the repair block 1 (i.e., user equipment UE3 and user equipment UE4). The sub-level data structure corresponding to the repair block 2 records the identification code RBID2 of the repair block 2, the downstream node GGSN1 which needs to send the repair block 2, and the user equipments which require the repair block 2 (i.e., user equipment UE2 and user equipment UE3).

The data structure 820 established with foregoing procedure and stored in the GGSN1 includes two sub-level data structures respectively corresponding to repair block 1 and repair block 2. The sub-level data structure corresponding to the repair block 1 records the identification code RBID1 of the repair block 1, the downstream node SGSN2 which needs to send the repair block 1, and user equipments which require the repair block 1 (user equipment UE3 and user equipment UE4). The sub-level data structure corresponding to the repair block 2 records the identification code RBID2 of the repair block 2, and the downstream nodes which need to send the repair block 2 are SGSN1 and SGSN2. Wherein the user equipment which is served by SGSN1 and requires the repair block 2 is the user equipment UE2, and the user equipment which is served by SGSN2 and requires the repair block 2 is the user equipment UE3.

The data structure 830 established and stored in the SGSN1 includes a sub-level data structure corresponding to the repair block 2. The sub-level data structure corresponding to the repair block 2 stores the identification code RBID2 of the repair block 2, the routing area RA2 which needs to send the repair block 2, and the user equipment UE2 which requires the repair block 2. The data structure 850 established and stored in SGSN2 includes two sub-level data structures respectively corresponding to the repair block 1 and the repair block 2. The sub-level data structure corresponding to the repair block 1 records the identification code RBID1 of the repair block 1, the downstream nodes (routing area RA3) which need to send the repair block 1, and the user equipments which require the repair block 1 are user equipment UE3 and user equipment UE4. The sub-level data structure corresponding to the repair block 2 records the identification code RBID2 of the repair block 2, the downstream node (routing area RA3) which need to send the repair block, and the user equipment which requires the repair block 2 is user equipment UE3.

The data structure 840 established and stored in RNC2 includes a sub-level data structure corresponding to repair block 2. The sub-level data structure corresponding to repair block 2 stores the identification code RBID2 of the repair block 2 and user equipment UE2 which requires the repair block 2. The data structure 860 stored in RNC3 includes two sub-level data structures corresponding to repair block 1 and repair block 2. The sub-level data structure corresponding to repair block 1 records the identification code RBID1 of repair block 1 and the user equipments which require the repair block 1 are user equipment UE3 and user equipment UE4. The sub-level data structure corresponding to repair block 2 records the identification code RBID2 of the repair block 2, and the user equipment which requires the repair block 2 is user equipment UE3.

As shown in step 530 of FIG. 5, after establishing the data structure on each network node involved in the file repair, BM-SC multicasts the repair blocks to the user equipments according to the established data structures. It should be mentioned here that in the present embodiment, the repair blocks are transmitted with the original MBMS Bearer Service for file downloading, and the transmission procedure thereof will be described below.

Referring to FIG. 8, first, BM-SC searches the sub-level data structures corresponding to the repair block 1 and the repair block 2 in the data structure 810, respectively. The BM-SC determines that the downstream node to which BM-SC needs to send repair block 1 is GGSN1, and the user equipments which require the repair block 1 are user equipment UE3 and user equipment UE4. Thus BM-SC sends the repair block 1 to GGSN1, while the downstream node that BM-SC needs to send the repair block 2 to is GGSN1, and the user equipments which require the repair block 2 are user equipment UE2 and user equipment UE3, thus BM-SC sends the repair block 2 to GGSN1.

GGSN1 receives data sent by BM-SC (for example, the repair blocks 1 and 2), and continues to send the repair blocks to the downstream nodes thereof according to the data structure 820. With the transmission of repair block 2 as example, GGSN1 inspects the sub-level data structure corresponding to repair block 2 in the data structure 820, and the result shows that the repair block 2 has to be sent respectively to SGSN1 and SGSN2, thus GGSN1 sends the repair block 2 to SGSN1 and SGSN2.

Next, with SGSN1 as example, after receiving the data sent by GGSN1, SGSN1 sends the repair block 2 to the routing area RA2 according to the sub-level data structure corresponding to repair block 2 in the data structure 830. It is assumed here that the RNC of routing area RA2 is RNC2, thus, the repair block 2 is sent to RNC2.

With RNC2 as example, RNC2 gets to know that the user equipment which requires the repair block 2 is user equipment UE2 by inspecting the sub-level data structure corresponding to repair block 2 in the data structure 840, thus, RNC2 sends the repair block 2 to the user equipment UE2.

In the present embodiment, SGSN2 and RNC3 also send the repair block 1 to the user equipments UE3 and UE4 and the repair block 2 to the user equipment UE3 in the same way.

Referring to FIG. 5 again, when BM-SC determines that there will be no data to be transmitted for a long time, BM-SC performs an MBMS Session Stop procedure to stop the MBMS session and release all the reserved resources. As shown in step 540, at executing the procedure, BM-SC deletes the data structures established in all the network nodes for transmitting repair blocks.

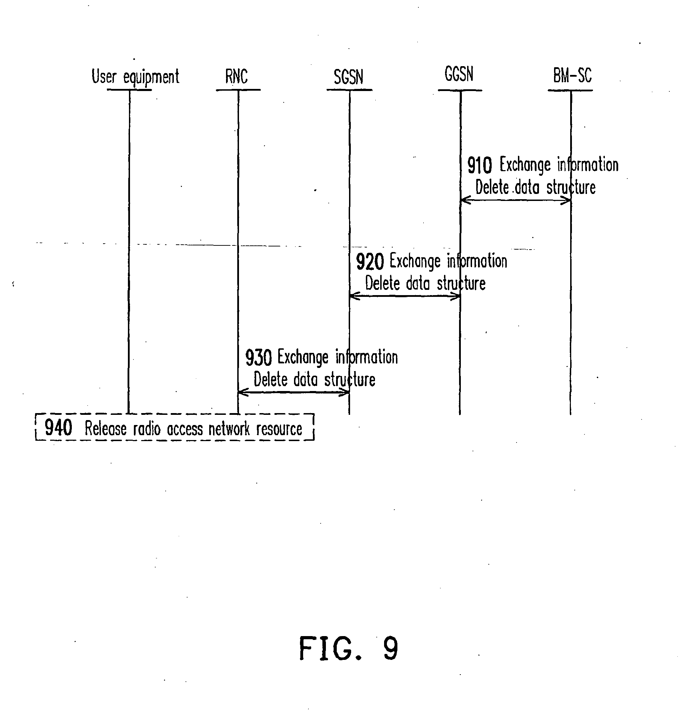

FIG. 9 is a flowchart illustrating data structure deletion according to an embodiment of the present invention. Referring to FIG. 9, in step 910, BM-SC determines which GGSNs are responsible for transmitting repair blocks according to the data structure stored therein. BM-SC exchanges messages with these GGSNs to release bearer resources and deletes the data structure stored in BM-SC.

Similarly, in step 920, the GGSN identifies which downstream SGSNs assist in the transmission of repair blocks by inspecting the data structure stored in the GGSN and exchanges messages with these SGSNs to release bearer resources between the GGSN and the SGSNs and delete the data structure stored in the GGSN.

In step 930, the SGSN determines that the downstream nodes assisting in the transmission of repair blocks correspond to which RNCs according to the data structure stored in the SGSN, and exchanges messages with these RNCs to release the bearer resources between the SGSN and these RNCs and delete the data structure stored in the SGSN.

Finally, in step 940, the RNC deletes the data structure stored therein and releases the related radio access network resources.

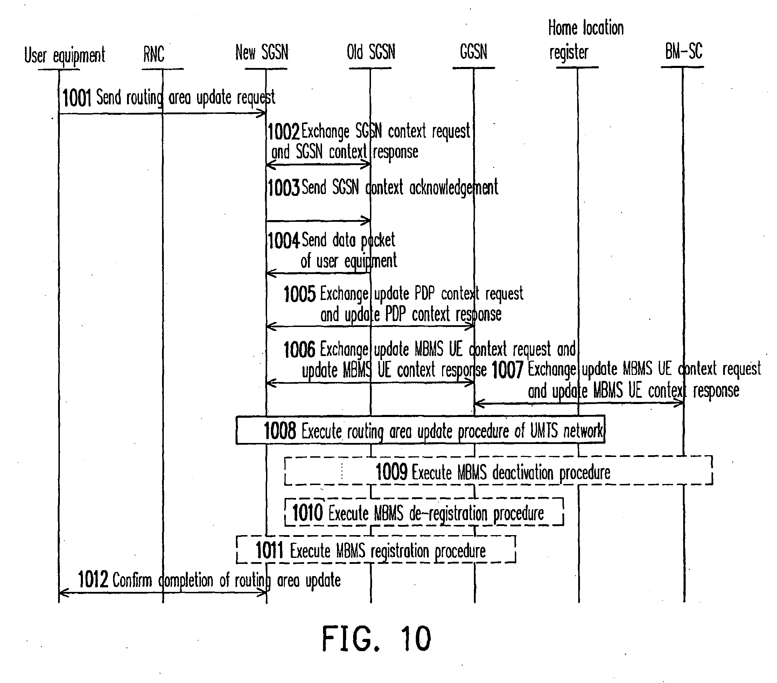

During the period from the beginning until the end of the repair session, if a user equipment moves to another routing area, the data structures stored in network nodes have to be updated to correctly transmit the repair blocks to the user equipments. FIG. 10 is a flowchart illustrating updating a routing area and modifying the data structure of a network node according to an embodiment of the present invention. In the present embodiment, the data structures of network nodes are updated through a Routing Area Update procedure.

Referring to FIG. 10, first, a user equipment determines whether the routing area wherein it is located has changed according to the Routing Area Identity (RAI) broadcasted periodically by the RNC and the RAI stored in the user equipment. If the routing area has changed, the user equipment sends a Routing Area Update request message to the new SGSN via the RNC (step 1001).

Next, in step 1002, the new SGSN obtains the Mobility Management (MM) context and the Packet Data Protocol (PDP) context of the user equipment by exchanging messages, for example, SGSN context request and SGSN context response messages, with the old SGSN. The old SGSN determines whether the new SGSN supports MBMS through the messages sent by the new SGSN. If the new SGSN supports MBMS, the old SGSN sends the MBMS UE Context of the user equipment and the information of the repair blocks required by the user equipment to the new SGSN. The new SGSN stores the MBMS UE Context and updates the RAI field therein, and then the new SGSN updates or establishes the data structure stored in the SGSN according to the information of the repair blocks required by the user equipment.

Next, the new SGSN notifies the old SGSN that the new SGSN is ready to receive the data packets belong to the user equipment from the old SGSN by sending, for example, a SGSN context acknowledgement message (step 1003).

After receiving the message, the old SGSN starts to send the data packets of the user equipment to the new SGSN (step 1004).

In step 1005, the new SGSN exchanges, for example, update PDP context request and update PDP context response messages with the GGSN to update the PDP context related to the user equipment in the GGSN. Wherein it is denoted that the old SGSN has been replaced by the new SGSN.

If the new SGSN supports MBMS, next, in step 1006, the new SGSN exchanges, for example, update MBMS UE Context request and update MBMS UE Context response messages with the GGSN to update the SGSN address in the MBMS UE Context. Meanwhile, in all the sub-level data structures containing the user equipment in the data structure of the GGSN, the downstream nodes (i.e., SGSNs) thereof which the repair blocks to be sent to have to be changed from old SGSN to new SGSN.

In step 1007, the GGSN exchanges, for example, update MBMS UE Context request and update MBMS UE Context response messages with BM-SC to update the MBMS UE Context stored in BM-SC.

In step 1008, a standard Routing Area Update procedure of UMTS network is executed to notify the Home Location Register (HLR) that the SGSN wherein the user equipment is located has changed.

If in Step 1002, the SGSN Context Request message indicates that the new SGSN does not support the MBMS service, the step 1009 is performed to deactivate the MBSM UE Context for the UE in the old SGSN, GGSNs, and the BM-SC by exercising the MBMS Multicast Service Deactivation procedure.

If the old SGSN does not have any MBMS UE Context for the MBMS service, and the "List of RAs" in the MBMS Bearer Context is empty, the old SGSN initiates the MBMS De-Registration procedure in step 1010 to remove its MBMS Bearer Context and requests the GGSN to remove the identifier of the old SGSN from the "downstream node list" in the GGSN's MBMS Bearer Context.

In step 1011, if the new SGSN supports MBMS, the new SGSN checks whether the MBMS Bearer Contexts for the MBMS services of the user equipment exist. Note that the user equipment may simultaneously subscribe multiple MBMS services (that may be also subscribed by other user equipments), and for a user equipment, there maybe more than one corresponding MBMS Bearer Service Contexts. For each MBMS Bearer Context the new SGSN does not have, the SGSN initiates the MBMS Registration procedure to create the MBMS Bearer Context and request the GGSN to add the identifier of the new SGSN to the "downstream node list" in the GGSN's MBMS Bearer Context.

In step 1012, the new SGSN sends the Routing Area Update Accept message to inform the UE that the RA Update procedure is successfully performed. The Routing Area Update Accept message carries the parameters to indicate whether the new SGSN supports the MBMS service. Upon receipt of the message, the UE judges whether the MBMS service can be received as before. If the new SGSN does not support the MBMS service, the UE removes the MBMS UE Context and quits the MBMS service. Then the UE acknowledges the new SGSN with the Routing Area Update Complete message.

After the user equipment finishes executing the Routing Area Update procedure, the old SGSN removes the MBMS UE Context on the old RNC. As to each repair block required by the user equipment, the old RNC has to remove the user equipment from the data structure. On the other hand, the new SGSN sends the MBMS UE Context to the new RNC, and the new RNC needs to update the data structure thereof, which is, the new RNC adds the user equipment into the sub-level data structures corresponding to the repair blocks required by the user equipment.

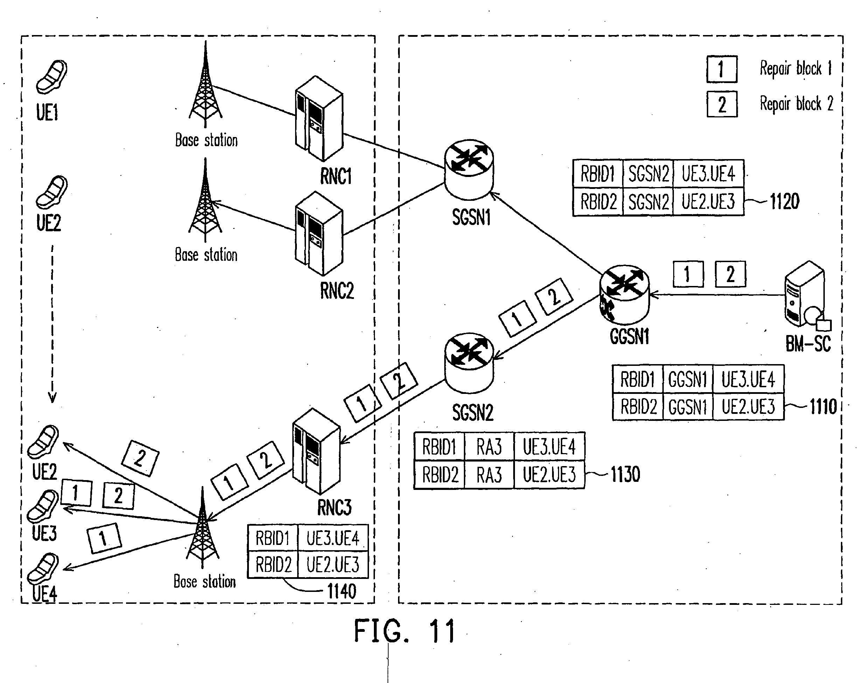

For example, if the user equipment UE2 in FIG. 8 is moved from the routing area 2 connected to SGSN1 to the routing area 3 connected to SGSN2, the changes in the data structures on the network nodes are as shown in FIG. 11. RNC2 and SGSN1 delete the data structures stored therein, and GGSN1, SGSN2, and RNC3 have to update the corresponding data structures because they need to assist in the transmission of the required repair blocks after the user equipment UE2 is moved.

In the embodiment described above, the BM-SC collects the repair request messages sent by user equipments, records the repair blocks requested by the user equipments, establishes the data structure, and then distributes the repair information to each of the downstream network nodes involved in file repair. The BM-SC only sends the repair blocks required by each user equipment to the user equipment according to the data structure, and the user equipment won't receive any unrequested repair block.

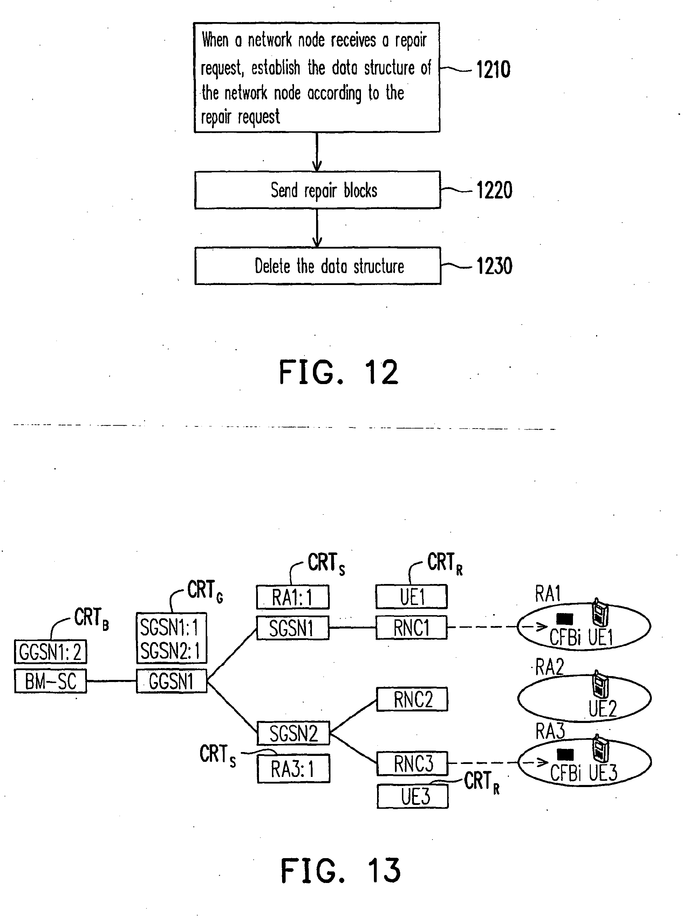

Another method for establishing data structures on network nodes provided by the present invention will be described below. FIG. 12 is a flowchart illustrating another implementation of the file repair method for MBMS according to an embodiment of the present invention. Referring to FIG. 12, each network node establishes a data structure stored in the network node according to the content of a repair request message sent by a user equipment when the network node receives the repair request message (step 1210).

For the convenience of description, in the present embodiment, data structures stored in various network nodes are generally referred to as corrupted file block routing table (CRT). Wherein the CRT stored in the BM-SC is referred to as CRT_{B,} the CRT stored in GGSN is referred to as CRT_{G}, the CRT stored in SGSN is referred to as CRT_{S}, and the CRT stored in RNC is referred to as CRT_{R}. As to the repair blocks required by each user equipment, CRT_{B,} CRT_{G}, and CRT_{S} record the downstream nodes which the repair block is to be sent to (which means CRT_{B}, CRT_{G}, and CRT_{S} respectively record the identification codes of the downstream GGSNs, SGSNs, and routing areas), and CRT_{B}, CRT_{G}, and CRT_{S} record the number of user equipments that require the repair block in the downstream nodes. CRT_{R} records the identification code of the user equipment which requires the repair block under the service of the RNC. Besides, to record the identification codes of the repair blocks required by a user equipment, a field of Corrupted File Block list (CFB list) is added to the original MBMS UE Context.

When the RNC receives a repair request message, the RNC captures the identification codes of the repair blocks recorded in the repair request message and fills the identification code of the user equipment into the CRT_{R} which the required repair blocks belong to sequentially.

When the SGSN receives a repair request message, the SGSN captures the identification codes of the repair blocks recorded in the repair request message and fills the identification codes of the repair blocks into the CFB list in the MBMS UE Context of the user equipment. As to each repair block required by the user equipment, the SGSN checks whether the CRT_{S} corresponding to the repair block has been established, and two cases will be taken in consideration below.

1. When the CRT_{S} corresponding to the repair block already exists, first, the SGSN finds out that the user equipment is served by which routing area by inspecting the MBMS UE Context, and then the SGSN checks whether the identification code of the routing area already exists in the CRT_{S}. If the identification code of the routing area already exists, the SGSN increases the number of user equipments in the routing area by 1. If the identification code of the routing area does not exist, theSGSN adds the identification code of the routing area to the CRT_{S} and sets the number of user equipments in the routing area to 1.

2. When the CRT_{S} corresponding to the repair block does not exist, the SGSN produces a CRT_{S} corresponding to the repair block first, and then the SGSN fills the required context into the CRT_{S} as described above.

When the GGSN (or the BM-SC) receives the repair request, the GGSN (or the BM-SC) respectively produces CRT_{G} (or CRT_{B}) and the CFB list by the same way of SGSN.

For example, as shown in FIG. 13, it is assumed that the user equipment UE1 and the user equipment UE3 both need the corrupted file block (CFB) i. The two user equipments are respectively located in routing area RA1 and routing area RA3, and routing area RA1 and routing area RA3 are respectively connected to RNC1 and RNC3. Wherein RNC1 is served by SGSN1 and RNC3 is served by SGSN2. SGSN1 and SGSN2 are served by GGSN1. Thus, when the repair request messages of the user equipment UE1 and the user equipment UE3 are sent successfully to the BM-SC, CRT_{B}, CRT_{G}, CRT_{S}, and CRT_{R} corresponding to CFB *i* are established, and the contents thereof are as below:
CRT_{B}[BM-SC]={GGSN1:2};
CRT_{G}[GGSN1]={SGSN1:1, SGSN2:1};
CRT_{S}[SGSN1]={RA1:1};CRT_{S}[SGSN2]={RA3:1};
CRT_{R} [RNC1]={UE1};CRT_{R} [RNC3]={UE3}

Next, as shown in step 1220 of FIG. 12, after establishing the data structure stored in each network node (i.e. CRT), the BM-SC, the GGSN, and the SGSN start to send repair blocks to downstream nodes based on the contents of CRT_{B}, CRT_{G}, and CRT_{S}. The RNC sends the repair blocks to the user equipments that require the repair blocks according to CRT_{R}.

How to transmit repair blocks to user equipments with the CRT on network nodes will be described below with reference to FIG. 13. First, the BM-SC searches the CRT_{B} for the downstream nodes that the repair blocks to be sent to and understands that the repair block CFB *i* is to be sent to GGSN1.

GGSN1 receives the repair block CFB *i* from the BM-SC and continues to send the repair block to the downstream node according to CRT_{G}. In the present embodiment, the inquiry result shows that the repair block CFB *i* has to be sent to SGSN1 and SGSN2, thus, GGSN1 sends the repair block CFB *i* respectively to SGSN1 and SGSN2.

The two SGSNs in the present embodiment (i.e. SGSN1 and SGSN2) receive the repair block CFB *i* sent by GGSN1, and respectively send the repair block to the downstream nodes according to the identification codes of downstream nodes recorded in CRT_{S}. With SGSN2 as example, SGSN2 gets to know that the repair block CFB *i* is to be sent to the routing area RA3 by inquiring CRT_{S} stored in the SGSN2, assuming that the RNC in the routing area RA3 is RNC3, thus, the repair block CFB *i* is sent to RNC3.

After receiving the repair blocks sent by the SGSN, the RNC can get to know each repair block has to be sent to which user equipments according to CRT_{R}. With RNC3 as example, RNC3 gets to know that user equipment UE3 requires the repair block CFB *i* by inquiring CRT_{R} stored in RNC3, so that RNC3 sends the repair block CFB *i* to the user equipment UE3.

In the present embodiment, after each network node finishes sending a repair block, the CRT corresponding to the repair block is deleted. Thus, after all the repair blocks are sent, the CRT on every network node does not exist any more (step 1230 in FIG. 12).

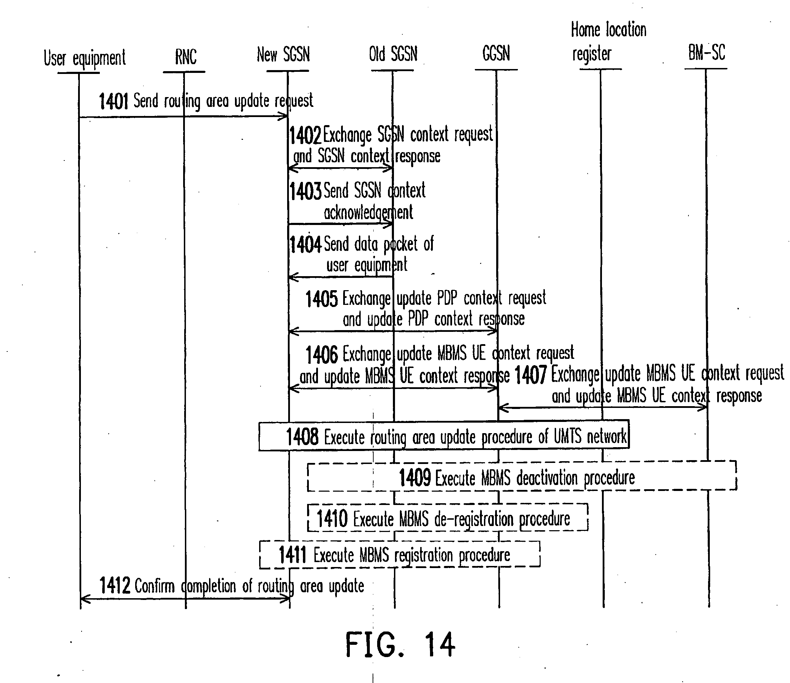

During the transmission of the repair block, if the user equipment moves to another routing area, the CRT on the network node has to be updated according to the movement result so as to ensure that the repair blocks can still be correctly sent after the user equipment is moved. FIG. 14 is a flowchart illustrating updating a routing area and modifying the CRT of a network node according to an embodiment of the present invention. In step 1401, the user equipment determines whether the routing area wherein the user equipment is located has changed according to the RAI broadcasted periodically in the RNC and the RAI stored in the user equipment. If the routing area has changed, the user equipment sends a Routing Area Update request message to the new SGSN via the RNC.

In step 1402, the new SGSN obtains the MM context and PDP context of the user equipment by exchanging, for example, SGSN context request and SGSN context response messages with the old SGSN. The old SGSN gets to know whether the new SGSN supports MBMS according to the messages sent by the new SGSN. If the new SGSN supports MBMS, the old SGSN sends the MBMS UE Context of the user equipment and the information of the repair blocks required by the user equipment to the new SGSN. The new SGSN stores the MBMS UE Context and updates the RAI field therein. Here the old SGSN finds out which CRT_{S} need to be updated by using the CFB list in the MBMS UE Context. Then the old SGSN deducts the numbers of user equipments that require the repair block in the old routing area in these CRT_{S} by 1. If there is already no any user equipment that requires the repair block (which is, the number of user equipments is 0), the old SGSN removes the identification code of the old routing area from the CRT_{S}. The new SGSN also finds out which CRT_{S} need to be updated by using the CFB list in the MBMS UE Context. Then the new SGSN checks whether the identification code of the new routing area exists in the CRT_{S}. If the routing area exists in the CRT_{S}, the number of user equipments is increased by 1. If the routing area identification code does not exist in the CRT_{S}, the identification code is added into the CRT_{S} and then the number of user equipments that require the repair block in this routing area is increased by 1.

Next, in step 1403, the new SGSN notifies the old SGSN that the new SGSN is ready to receive data packets belonging to the user equipment from the old SGSN by sending, for example, a SGSN context acknowledgement message.

After receiving the message, the old SGSN starts to send data packets of the user equipment to the new SGSN (step 1404).

In step 1405, the new SGSN exchanges, for example, update PDP context request and update PDP context response messages with the GGS to update the PDP context related to the user equipment which is stored in the GGSN. Wherein it is denoted that the old SGSN has been replaced by the new SGSN.

If the new SGSN support MBMS, in step 1406, the new SGSN exchanges, for example, update MBMS UE Context request and update MBMS UE Context response messages with the GGSN to update the SGSN address field of the MBMS UE Context stored in the GGSN. In this case, the CRT_{G} stored in the GGSN has to be updated too, and the GGSN finds out which CRT_{G} need to be updated by using the CFB list in the MBMS UE Context. Then the numbers of user equipments requiring the repair block in the old SGSN in the CRT_{G} are deducted by 1. If there is no more user equipment requiring the repair block with this SGSN (i.e., the number of user equipments is 0), the GGSN removes the identification code of the old SGSN from the CRT_{G}. Next, the GGSN checks whether the new SGSN identification code exists in the CRT_{G}. If the new SGSN identification code does not exist, the GGSN adds the new SGSN identification code into the CRT_{G} and then increases the number of user equipments requiring the repair block in the CRT_{G} with the new SGSN by 1.

In step 1407, the GGSN exchanges, for example, update MBMS UE Context request and update MBMS UE Context response messages to update the MBMS UE Context stored in the BM-SC.

Next, a standard Routing Area Update procedure of UMTS network is executed to notify the HLR that the SGSN of the user equipment has changed (step 1408).

If in Step 1402, the SGSN Context Request message indicates that the new SGSN does not support the MBMS service, the step 1409 is performed to deactivate the MBSM UE Context for the UE in the old SGSN, GGSNs, and the BM-SC by exercising the MBMS Multicast Service Deactivation procedure.

If the old SGSN does not have any MBMS UE Context for the MBMS service, and the "List of RAs" in the MBMS Bearer Context is empty, the old SGSN initiates the MBMS De-Registration procedure in step 1410 to remove its MBMS Bearer Context and requests the GGSN to remove the identifier of the old SGSN from the "downstream node list" in the GGSN's MBMS Bearer Context.

In 1411, if the new SGSN supports MBMS, the new SGSN checks whether MBMS Bearer Context. MBMS Bearer Contexts for the MBMS services of the user equipment exist. Note that the user equipment may simultaneously subscribe multiple MBMS services (that may be also subscribed by other user equipments), and for a user equipment, there maybe more than one corresponding MBMS Bearer Service Contexts. For each MBMS Bearer Context the new SGSN does not have, the SGSN initiates the MBMS Registration procedure to create the MBMS Bearer Context and request the GGSN to add the identifier of the new SGSN to the "downstream node list" in the GGSN's MBMS Bearer Context.

Next, in step 1412, the new SGSN sends the Routing Area Update Accept message to inform the UE that the RA Update procedure is successfully performed. The Routing Area Update Accept message carries the parameters to indicate whether the new SGSN supports the MBMS service. Upon receipt of the message, the UE judges whether the MBMS service can be received as before. If the new SGSN does not support the MBMS service, the UE removes the MBMS UE Context and quits the MBMS service. Then the UE acknowledges the new SGSN with the Routing Area Update Complete message.

After the user equipment finishes executing the Routing Area Update procedure, the old SGSN removes the MBMS UE Context on the old RNC. In the present embodiment, the CRT_{R} stored in the old RNC has to be updated too, which means, as to each repair block required by the user equipment, the old RNC has to remove the identification code of the user equipment from the CRT_{R}. On the other hand, the new SGSN sends the MBMS UE Context to the new RNC, and here the new RNC has to update the CRT_{R} thereof. As to each of the repair blocks required by the user equipment, the new RNC adds the identification code of the user equipment into the CRT_{R}.

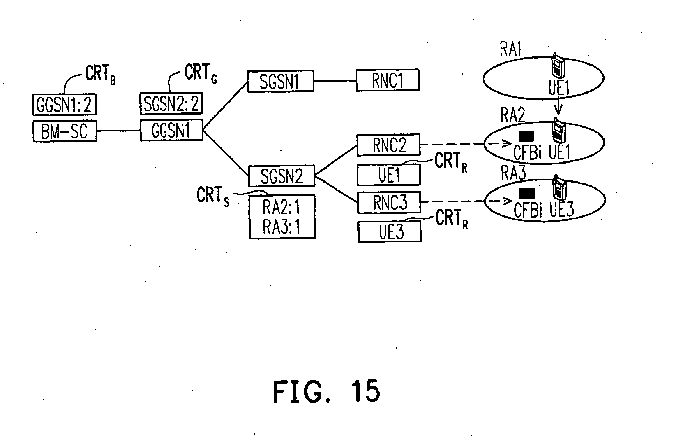

For example, if the user equipment UE1 in FIG. 13 moves from being connected to the routing area RA1 of SGSN1 to being connected to the routing area RA2 of SGSN2, the changes in the CRT of the network nodes after the user equipment moved are as shown in FIG. 15. The CRT_{S} of GGSN1, SGSN1, and SGSN2 are all changed, and the identification code of the user equipment UE1 is removed from CRT_{R}[RNC1] and added into CRT_{R}[RNC2]. On SGSN1 and RNC1, CRT_{S} and CRT_{R} corresponding to the repair block CFB *i* are also deleted because the number of user equipments is changed to 0.

In the embodiment described above, the data structure stored on the network nodes is established at transmitting the repair request message sent by the user equipment. The BM-SC sends each repair block to the user equipments that require the repair block according to the data structure. Even the routing area wherein the user equipment is located is changed during the procedure, the required repair blocks can still be transmitted correctly.

In overview, according to the file repair method for MBMS and UMTS network of the present invention, a data structure is established according to an repair request message sent by a user equipment, and each repair block is sent to the user equipments that require the repair block with the original MBMS Bearer Service for file downloading according to the data structure established.

The present invention has the advantages of multicasting technique, and network resources won't be wasted on the transmission of the same repair block when a plurality of user equipments request the s ame repair block.

According to the present invention, a repair block won't be sent to a user equipment that does not require it, so that unnecessary usage of network bandwidth is reduced, and the user equipment does not have to spend extra time and resources for checking whether the received the repair block is required.

According to the present invention, the repair blocks can be transmitted with the original MBMS Bearer Service for file downloading so that the user equipment is not required to join the new multicast group through the MBMS, Multicast Service Activation procedure, and the signaling overheads can be reduced.

Generally speaking, in the present invention, no extra signaling overhead is required and each user equipment receives only the repair block it requires, accordingly, network traffic and signal transmission during file repair can be reduced greatly, so that the usage of resources of the core network and the radio access network can be reduced.

## Claims

1. A file repair method for Multimedia Broadcast Multicast Service MBMS, applicable to a Universal Mobile Telecommunications System UMTS network comprising a plurality of network nodes, wherein each of the network nodes is a Broadcast Multicast-Service Center BM-SC, a Gateway GPRS Support Nodes GGSN, a Serving GPRS Support Nodes SGSN, or a Radio Network Controllers RNC; the method comprising:
storing an MBMS UE Context in each of the network nodes during an MBMS Multicast Service Activation procedure;
a plurality of user equipments sending repair request messages to the BM-SC through the other network nodes after downloading a file (610, 630), wherein the repair request messages comprise an identification code of a repair block required for repairing the file and identification codes of the user equipments;
the BM-SC sending a repair response message to each of the user equipments (620, 640), wherein the repair response message comprises an address of a session description of an original MBMS Bearer Service for downloading the file;
the BM-SC collecting the identification codes of the repair block and the user equipments from the repair request messages;
the BM-SC determining which of the GGSNs serves each of the user equipments by searching the MBMS UE Context stored in the BM-SC according to the identification codes of the user equipments;
the BM-SC categorizing the user equipments according to the GGSNs;
the BM-SC establishing (710) and storing a data structure (810) comprising a sub-level data structure corresponding to the repair block, wherein the sub-level data structure comprises the identification codes of the repair block, the GGSNs, and the user equipments served by each of the GGSNs;
the BM-SC sending (720) the identification codes of the repair block and the user equipments to each of the GGSNs, wherein each of the GGSNs receives the identification codes of the user equipments served by the particular GGSN;
each of the GGSNs determining which of the SGSNs serves each of the downstream user equipments of the particular GGSN by searching the MBMS UE Context stored in the particular GGSN according to the identification codes of the downstream user equipments;
each of the GGSNs categorizing the downstream user equipments according to the SGSNs;
each of the GGSNs establishing (730) and storing a data structure (820) comprising a sub-level data structure corresponding to the repair block, wherein the sub-level data structure comprises the identification codes of the repair block, the downstream SGSNs of the particular GGSN, and the downstream user equipments served by each of the downstream SGSNs;
each of the GGSNs sending (740) the identification codes of the repair block and the user equipments served by the particular GGSN to the downstream SGSNs of the particular GGSN, wherein each of the downstream SGSNs receives the identification codes of the user equipments served by the particular downstream SGSN;
each of the SGSNs determining in which routing area each of the downstream user equipments of the particular SGSN is located by searching the MBMS UE Context stored in the particular SGSN according to the identification codes of the downstream user equipments;
each of the SGSNs categorizing the downstream user equipments according to the routing areas;
each of the SGSNs establishing (750) and storing a data structure (830, 850) comprising a sub-level data structure corresponding to the repair block, wherein the sub-level data structure comprises the identification codes of the repair block, the downstream routing areas of the particular SGSN, and the downstream user equipments in each of the downstream routing areas;
each of the SGSNs sending the identification codes of the repair block and the user equipments served by the particular SGSN to the downstream RNCs of the particular SGSN, wherein each of the downstream RNCs receives the identification codes of the user equipments served by the particular downstream RNC;
each of the RNCs establishing and storing a data structure (840, 860) comprising a sub-level data structure corresponding to the repair block, wherein the sub-level data structure comprises the identification codes of the repair block and the user equipments served by the particular RNC; and
the BM-SC multicasting the repair block to the user equipments through the other network nodes according to the data structure stored in each of the network nodes, using the original MBMS Bearer Service for downloading the file.

2. The file repair method of claim 1, further comprising:
when one of the user equipments moves to another routing area, updating the data structure related to the user equipment in each of the network nodes after the user equipment's movement through a Routing Area Update procedure.

3. The file repair method of claim 2, wherein the step of updating the data structure comprises:
determining which of the data structures stored in the network nodes need to be updated according to the identification codes of the downstream user equipments of each of the network nodes stored in the sub-level data structures.

4. A Universal Mobile Telecommunications System UMTS network comprising a plurality of network nodes, wherein each of the network nodes is a Broadcast Multicast-Service Center BM-SC, a Gateway GPRS Support Nodes GGSN, a Serving GPRS Support Nodes SGSN, or a Radio Network Controllers RNC;
each of the network nodes is adapted to store an MBMS UE Context during an MBMS Multicast Service Activation procedure;
the BM-SC is adapted to receive repair request messages (610, 630) from a plurality of user equipments and the other network nodes are adapted to forward the repair request messages from the user equipments to the BM-SC, wherein the repair request messages are sent by the user equipments after the user equipments download a file and the repair request messages comprise an identification code of a repair block required for repairing the file and identification codes of the user equipments;
the BM-SC is further adapted to send a repair response message (620, 640) to each of the user equipments, wherein the repair response message comprises an address of a session description of an original MBMS Bearer Service for downloading the file;
the BM-SC is further adapted to collect the identification codes of the repair block and the user equipments from the repair request messages;
the BM-SC is further adapted to determine which of the GGSNs serves each of the user equipments by searching the MBMS UE Context stored in the BM-SC according to the identification codes of the user equipments;
the BM-SC is further adapted to categorize the user equipments according to the GGSNs;
the BM-SC is further adapted to establish (710) and store a data structure (810) comprising a sub-level data structure corresponding to the repair block, wherein the sub-level data structure comprises the identification codes of the repair block, the GGSNs, and the user equipments served by each of the GGSNs;
the BM-SC is further adapted to send (720) the identification codes of the repair block and the user equipments to each of the GGSNs, wherein each of the GGSNs receives the identification codes of the user equipments served by the particular GGSN;
each of the GGSNs is further adapted to determine which of the SGSNs serves each of the downstream user equipments of the particular GGSN by searching the MBMS UE Context stored in the particular GGSN according to the identification codes of the downstream user equipments;
each of the GGSNs is further adapted to categorize the downstream user equipments according to the SGSNs;
each of the GGSNs is further adapted to establish (730) and store a data structure (820) comprising a sub-level data structure corresponding to the repair block, wherein the sub-level data structure comprises the identification codes of the repair block, the downstream SGSNs of the particular GGSN, and the downstream user equipments served by each of the downstream SGSNs;
each of the GGSNs is further adapted to send (740) the identification codes of the repair block and the user equipments served by the particular GGSN to the downstream SGSNs of the particular GGSN, wherein each of the downstream SGSNs receives the identification codes of the user equipments served by the particular downstream SGSN;
each of the SGSNs is further adapted to determine in which routing area each of the downstream user equipments of the particular SGSN is located by searching the MBMS UE Context stored in the particular SGSN according to the identification codes of the downstream user equipments;
each of the SGSNs is further adapted to categorize the downstream user equipments according to the routing areas;
each of the SGSNs is further adapted to establish (750) and store a data structure (830, 850) comprising a sub-level data structure corresponding to the repair block, wherein the sub-level data structure comprises the identification codes of the repair block, the downstream routing areas of the particular SGSN, and the downstream user equipments in each of the downstream routing areas;
each of the SGSNs is further adapted to send the identification codes of the repair block and the user equipments served by the particular SGSN to the downstream RNCs of the particular SGSN, wherein each of the downstream RNCs receives the identification codes of the user equipments served by the particular downstream RNC;
each of the RNCs is further adapted to establish and store a data structure (840, 860) comprising a sub-level data structure corresponding to the repair block, wherein the sub-level data structure comprises the identification codes of the repair block and the user equipments served by the particular RNC; and
the BM-SC is further adapted to multicast the repair block to the user equipments according to the data structure, using the original MBMS Bearer Service for downloading the file; the other network nodes are further adapted to forward the repair block to the user equipments according to the data structure.

5. The UMTS network of claim 4, wherein each of the network nodes is further adapted to update the data structure related to one of the user equipments after the particular user equipment's movement to another routing area through a Routing Area Update procedure.

6. The UMTS network of claim 5, wherein each of the network nodes is further adapted to determine whether the data structure stored in the particular network node needs to be updated or not according to the identification codes of the downstream user equipments stored in the sub-level data structure of the particular network node.

7. A file repair method for Multimedia Broadcast Multicast Service MBMS, applicable to a Universal Mobile Telecommunications System UMTS network comprising a plurality of network nodes, wherein each of the network nodes is a Broadcast Multicast-Service Center BM-SC, a Gateway GPRS Support Nodes GGSN, a Serving GPRS Support Nodes SGSN, or a Radio Network Controllers RNC; the method comprising:
storing an MBMS UE Context in each of the network nodes during an MBMS Multicast Service Activation procedure;
a plurality of user equipments sending repair request messages to the BM-SC through the other network nodes after downloading a file, wherein the repair request messages comprise an identification code of a repair block required for repairing the file and identification codes of the user equipments;
when the RNCs forward the repair request messages to the SGSNs, each of the RNCs collecting the identification codes of the repair block and the user equipments served by the particular RNC directly from the repair request messages, each of the RNCs establishing and storing a data structure comprising a sub-level data structure corresponding to the repair block, wherein the sub-level data structure comprises the identification codes of the repair block and the user equipments served by the particular RNC;
when the SGSNs forward the repair request messages to the GGSNs, each of the SGSNs collecting the identification codes of the repair block and the user equipments served by the particular SGSN directly from the repair request messages, each of the SGSNs determining in which routing area each of the downstream user equipments of the particular SGSN is located by searching the MBMS UE Context stored in the particular SGSN according to the identification codes of the downstream user equipments, each of the SGSNs establishing and storing a data structure comprising a sub-level data structure corresponding to the repair block, wherein the sub-level data structure comprises the identification codes of the repair block and the downstream routing areas of the particular SGSN;
when the GGSNs forward the repair request messages to the BM-SC, each of the GGSNs collecting the identification codes of the repair block and the user equipments served by the particular GGSN directly from the repair request messages, each of the GGSNs determining which of the SGSNs serves each of the downstream user equipments of the particular GGSN by searching the MBMS UE Context stored in the particular GGSN according to the identification codes of the downstream user equipments, each of the GGSNs establishing and storing a data structure comprising a sub-level data structure corresponding to the repair block, wherein the sub-level data structure comprises the identification codes of the repair block and the downstream SGSNs of the particular GGSN;
the BM-SC collecting the identification codes of the repair block and the user equipments from the repair request messages;
the BM-SC determining which of the GGSNs serves each of the user equipments by searching the MBMS UE Context stored in the BM-SC according to the identification codes of the user equipments;
the BM-SC establishing and storing a data structure comprising a sub-level data structure corresponding to the repair block, wherein the sub-level data structure comprises the identification codes of the repair block and the GGSNs;
the BM-SC sending a repair response message to each of the user equipments, wherein the repair response message comprises an address of a session description of an original MBMS Bearer Service for downloading the file; and
multicasting the repair block from the BM-SC to the user equipments through the other network nodes according to the data structure stored in each of the network nodes, using the original MBMS Bearer Service for downloading the file.

8. A Universal Mobile Telecommunications System UMTS network comprising a plurality of network nodes, wherein each of the network nodes is a Broadcast Multicast-Service Center BM-SC, a Gateway GPRS Support Nodes GGSN, a Serving GPRS Support Nodes SGSN, or a Radio Network Controllers RNC;
each of the network nodes is adapted to store an MBMS UE Context during an MBMS Multicast Service Activation procedure;
the RNCs are further adapted to forward a plurality of repair request messages through the SGSNs and the GGSNs to the BM-SC, wherein the repair request messages are sent from a plurality of user equipments after downloading a file, the repair request messages comprise an identification code of a repair block required for repairing the file and identification codes of the user equipments;
each of the RNCs is further adapted to collect the identification codes of the repair block and the user equipments served by the particular RNC directly from the repair request messages when forwarding the repair request messages to the SGSN;
each of the RNCs is further adapted to establish and store a data structure comprising a sub-level data structure corresponding to the repair block, wherein the sub-level data structure comprises the identification codes of the repair block and the user equipments served by the particular RNC;
each of the SGSNs is further adapted to collect the identification codes of the repair block and the user equipments served by the particular SGSN directly from the repair request messages when forwarding the repair request messages to the GGSNs;
each of the SGSNs is further adapted to determine in which routing area each of the downstream user equipments of the particular SGSN is located by searching the MBMS UE Context stored in the particular SGSN according to the identification codes of the downstream user equipments;
each of the SGSNs is further adapted to establish and store a data structure comprising a sub-level data structure corresponding to the repair block, wherein the sub-level data structure comprises the identification codes of the repair block and the downstream routing areas of the particular SGSN;
each of the GGSNs is further adapted to collect the identification codes of the repair block and the user equipments served by the particular GGSN directly from the repair request messages when forwarding the repair request messages to the BM-SC;
each of the GGSNs is further adapted to determine which of the SGSNs serves each of the downstream user equipments of the particular GGSN by searching the MBMS UE Context stored in the particular GGSN according to the identification codes of the downstream user equipments;
each of the GGSNs is further adapted to establish and store a data structure comprising a sub-level data structure corresponding to the repair block, wherein the sub-level data structure comprises the identification codes of the repair block and the downstream SGSNs of the particular GGSN;
the BM-SC is further adapted to collect the identification codes of the repair block and the user equipments from the repair request messages, and determine which of the GGSNs serves each of the user equipments by searching the MBMS UE Context stored in the BM-SC according to the identification codes of the user equipments;
the BM-SC is further adapted to establish and store a data structure comprising a sub-level data structure corresponding to the repair block, wherein the sub-level data structure comprises the identification codes of the repair block and the GGSNs;
the BM-SC is further adapted to send a repair response message to each of the user equipments, wherein the repair response message comprises an address of a session description of an original MBMS Bearer Service for downloading the file;
the BM-SC is further adapted to multicast the repair block to the user equipments through the other network nodes according to the data structure stored in each of the network nodes, using the original MBMS Bearer Service for downloading the file.

## Patentansprüche

1. Verfahren zur Dateireparatur für den Multimedia Broadcast Multicast Service MBMS, das auf ein Universal Mobile Telecommunications System UMTS-Netzwerk anwendbar ist, das eine Mehrzahl von Netzwerkknoten aufweist, wobei jeder der Netzwerkknoten ein Broadcast Multicast-Service Center BM-SC, ein Gateway GPRS Support Node GGSN, ein Serving GPRS Support Node SGSN oder ein Radio Network Controller RNC (Funknetzwerk-Steuereinrichtung) ist; wobei das Verfahren die folgenden Schritte umfasst:
Speichern eines MBMS UE-Kontextes in jedem der Netzwerkknoten während einer MBMS Multicast Service-Aktivierungsprozedur;
Senden von Reparaturanfragemeldungen durch eine Mehrzahl von Benutzergeräten an das BM-SC über die anderen Netzwerkknoten, nachdem eine Datei (610, 630) herunter geladen worden ist, wobei die Reparaturanfragemeldungen einen Identifikationscode eines zur Reparatur der Datei benötigten Reparaturblocks und Identifikationscodes der Benutzergeräte aufweisen;
Senden einer Reparaturantwortmeldung an jedes der Benutzergeräte (620, 640) durch das BM-SC, wobei die Reparaturantwortmeldung eine Adresse einer Sitzungsbeschreibung eines ursprünglichen MBMS-Trägerdienstes zum Herunterladen der Datei aufweist;
Einholen der Identifikationscodes des Reparaturblocks und der Benutzergeräte aus den Reparaturanfragemeldungen durch das BM-SC;
Bestimmen durch das BM-SC, welcher der GGSNs jedes der Benutzergeräte bedient, indem der im BM-SC gespeicherte MBMS UE-Kontext entsprechend den Identifikationscodes der Benutzergeräte durchsucht wird;
Kategorisieren der Benutzergeräte entsprechend den GGSNs durch das BM-SC;
Aufbauen (710) und Speichern einer Datenstruktur (810), die eine dem Reparaturblock zugeordnete Unterebenen-Datenstruktur aufweist, durch das BM-SC, wobei die Unterebenen-Datenstruktur die Identifikationscodes des Reparaturblocks, der GGSNs und der durch jeden der GGSNs bedienten Benutzergeräte aufweist;
Senden (720) der Identifikationscodes des Reparaturblocks und der Benutzergeräte an jeden der GGSNs durch das BM-SC, wobei jeder der GGSNs die Identifikationscodes der durch einen bestimmten GGSN bedienten Benutzergeräte empfängt;
Bestimmen durch jeden der GGSNs, welcher der SGSNs jedes der nachgelagerten Benutzergeräte des jeweiligen GGSN bedient, indem der im jeweiligen GGSN gespeicherte MBMS UE-Kontext entsprechend den Identifikationscodes der nachgelagerten Benutzergeräte durchsucht wird;
Kategorisieren der nachgelagerten Benutzergeräte entsprechend den SGSNs durch jeden der GGSNs;
Aufbauen (730) und Speichern einer Datenstruktur (820), die eine dem Reparaturblock zugeordnete Unterebenen-Datenstruktur aufweist, durch jeden der GGSNs, wobei die Unterebenen-Datenstruktur die Identifikationscodes des Reparaturblocks, der nachgelagerten SGSNs des jeweiligen GGSN und der durch jeden der nachgelagerten SGSNs bedienten Benutzergeräte aufweist;
Senden (740) der Identifikationscodes des Reparaturblocks und der durch den jeweiligen GSGN bedienten Benutzergeräte an die nachgelagerten SGSNs des jeweiligen GGSN durch jeden der GGSNs, wobei jeder der nachgelagerten SGSNs die Identifikationscodes der durch den jeweiligen nachgelagerten SGSN bedienten Benutzergeräte empfängt;
Bestimmen durch jeden der SGSNs, in welchem Routingbereich sich jedes der nachgelagerten Benutzergeräte des jeweiligen SGSN befindet, indem der im jeweiligen SGSN gespeicherte MBMS UE-Kontext entsprechend den Identifikationscodes der nachgelagerten Benutzergeräte durchsucht wird;
Kategorisieren der nachgelagerten Benutzergeräte entsprechend den Routingbereichen durch jeden der SGSNs;
Aufbauen (750) und Speichern einer Datenstruktur (830, 850), die eine dem Reparaturblock zugeordnete Unterebenen-Datenstruktur aufweist, durch jeden der SGSNs, wobei die Unterebenen-Datenstruktur die Identifikationscodes des Reparaturblocks, der nachgelagerten Routingbereiche des jeweiligen SGSN und der nachgelagerten Benutzergeräte in jedem der nachgelagerten Routingbereiche aufweist;
Senden der Identifikationscodes des Reparaturblocks und der durch den jeweiligen SGSN bedienten Benutzergeräte an die nachgelagerten RNCs des jeweiligen SGSN durch jeden der SGSNs, wobei jeder der nachgelagerten RNCs die Identifikationscodes der durch den jeweiligen nachgelagerten RNC bedienten Benutzergeräte empfängt;
Aufbauen und Speichern einer Datenstruktur (840, 860), die eine dem Reparaturblock zugeordnete Unterebenen-Datenstruktur aufweist, durch jeden der RNCs, wobei die Unterebenen-Datenstruktur die Identifikationscodes des Reparaturblocks und der durch den jeweiligen RNC bedienten Benutzergeräte aufweist; und
Mehrfachsenden (Multicasting) des Reparaturblocks an die Benutzergeräte über die anderen Netzwerkknoten durch das BM-SC entsprechend der in jedem der Netzwerkknoten gespeicherten Datenstruktur unter Verwendung des ursprünglichen MBMS-Trägerdienstes zum Herunterladen der Datei.

2. Verfahren zur Dateireparatur nach Anspruch 1 mit dem weiteren Schritt:
wenn sich eines der Benutzergeräte zu einem anderen Routingbereich bewegt, Aktualisieren der dem Benutzergerät zugehörigen Datenstruktur in jedem der Netzwerkknoten durch eine Routingbereich-Aktualisierungsprozedur nach der Bewegung des Benutzergerätes.

3. Verfahren zur Dateireparatur nach Anspruch 2, wobei der Schritt des Aktualisierens der Datenstruktur Folgendes umfasst:
Bestimmen, welche der in den Netzwerkknoten gespeicherten Datenstrukturen aktualisiert werden müssen, entsprechend den in den Unterebenen-Datenstrukturen gespeicherten Identifikationscodes der nachgelagerten Benutzergeräte eines jeden der Netzwerkknoten.

4. Universal Mobile Telecommunications System UMTS-Netzwerk, das eine Mehrzahl von Netzwerkknoten aufweist, wobei jeder der Netzwerkknoten ein Broadcast Multicast-Service Center BM-SC, ein Gateway GPRS Support Node GGSN, ein Serving GPRS Support Node SGSN oder ein Radio Network Controller RNC (Funknetzwerk-Steuereinrichtung) ist;
jeder der Netzwerkknoten ist so ausgebildet, dass er einen MBMS UE-Kontext während einer MBMS Multicast Service-Aktivierungsprozedur speichert;
das BM-SC ist so ausgebildet, dass es Reparaturanfragemeldungen (610, 630) von einer Mehrzahl von Benutzergeräten empfängt, und die anderen Netzwerkknoten sind so ausgebildet, dass sie die Reparaturanfragemeldungen von den Benutzergeräten an das BM-SC weiterleiten, wobei die Reparaturanfragemeldungen durch die Benutzergeräte gesendet werden, nachdem die Benutzergeräte eine Datei heruntergeladen haben, und die Reparaturanfragemeldungen einen Identifikationscode eines zur Reparatur der Datei benötigten Reparaturblocks und Identifikationscodes der Benutzergeräte aufweisen;
das BM-SC ist weiter so ausgebildet, dass es eine Reparaturantwortmeldung (620, 640) an jedes der Benutzergeräte sendet, wobei die Reparaturantwortmeldung eine Adresse einer Sitzungsbeschreibung eines ursprünglichen MBMS-Trägerdienstes zum Herunterladen der Datei aufweist;
das BM-SC ist weiter so ausgebildet, dass es die Identifikationscodes des Reparaturblocks und der Benutzergeräte von den Reparaturanfragemeldungen einholt;
das BM-SC ist weiter so ausgebildet, dass es bestimmt, welcher der GGSNs jedes der Benutzergeräte bedient, indem der im BM-SC gespeicherte MBMS UE-Kontext entsprechend den Identifikationscodes der Benutzergeräte durchsucht wird;
das BM-SC ist weiter so ausgebildet, dass es die Benutzergeräte entsprechend den GGSNs kategorisiert;
das BM-SC ist weiter so ausgebildet, dass es eine Datenstruktur (810) aufbaut (710) und speichert, die eine dem Reparaturblock zugeordnete Unterebenen-Datenstruktur aufweist, wobei die Unterebenen-Datenstruktur die Identifikationscodes des Reparaturblocks, der GGSNs und der durch jeden der GGSNs bedienten Benutzergeräte aufweist;
das BM-SC ist weiter so ausgebildet, dass es die Identifikationscodes des Reparaturblocks und der Benutzergeräte an jeden der GGSNs sendet (720), wobei jeder der GGSNs die Identifikationscodes der durch den jeweiligen GGSN bedienten Benutzergeräte empfängt;
jeder der GGSNs ist weiter so ausgebildet, dass er bestimmt, welcher der SGSNs jedes der nachgelagerten Benutzergeräte des jeweiligen GGSN bedient, indem der im jeweiligen GGSN gespeicherte MBMS UE-Kontext entsprechend den Identifikationscodes der nachgelagerten Benutzergeräte durchsucht wird;
jeder der GGSNs ist weiter so ausgebildet, dass er die nachgelagerten Benutzergeräte entsprechend den SGSNs kategorisiert;
jeder der GGSNs ist weiter so ausgebildet, dass er eine Datenstruktur (820) aufbaut (730) und speichert, die eine dem Reparaturblock zugeordnete Unterebenen-Datenstruktur aufweist, wobei die Unterebenen-Datenstruktur die Identifikationscodes des Reparaturblocks, der nachgelagerten SGSNs des jeweiligen GGSN und der durch jeden der nachgelagerten SGSNs bedienten Benutzergeräte aufweist;
jeder der GGSNs ist weiter so ausgebildet, dass er die Identifikationscodes des Reparaturblocks und der durch den jeweiligen GGSN bedienten Benutzergeräte an die nachgelagerten SGSNs des jeweiligen GGSN sendet (740), wobei jeder der nachgelagerten SGSNs die Identifikationscodes der durch den jeweiligen nachgelagerten SGSN bedienten Benutzergeräte empfängt;
jeder der SGSNs ist weiter so ausgebildet, dass er bestimmt, in welchem Routingbereich sich jedes der nachgelagerten Benutzergeräte des jeweiligen SGSN befindet, indem der im jeweiligen SGSN gespeicherte MBMS UE-Kontext entsprechend den Identifikationscodes der nachgelagerten Benutzergeräte durchsucht wird;
jeder der SGSNs ist weiter so ausgebildet, dass er die nachgelagerten Benutzergeräte entsprechend den Routingbereichen kategorisiert;
jeder der SGSNs ist weiter so ausgebildet, dass er eine Datenstruktur (830, 850) aufbaut (750) und speichert, die eine dem Reparaturblock zugeordnete Unterebenen-Datenstruktur aufweist, wobei die Unterebenen-Datenstruktur die Identifikationscodes des Reparaturblocks, der nachgelagerten Routingbereiche des jeweiligen SGSN und der nachgelagerten Benutzergeräte in jedem der nachgelagerten Routingbereiche aufweist;
jeder der SGSNs ist weiter so ausgebildet, dass er die Identifikationscodes des Reparaturblocks und der durch den jeweiligen SGSN bedienten Benutzergeräte an die nachgelagerten RNCs des jeweiligen SGSN sendet, wobei jeder der nachgelagerten RNCs die Identifikationscodes der durch den jeweiligen nachgelagerten RNC bedienten Benutzergeräte empfängt;
jeder der RNCs ist weiter so ausgebildet, dass er eine Datenstruktur (840, 860) aufbaut und speichert, die eine dem Reparaturblock zugeordnete Unterebenen-Datenstruktur aufweist, wobei die Unterebenen-Datenstruktur die Identifikationscodes des Reparaturblocks und der durch den jeweiligen RNC bedienten Benutzergeräte aufweist; und
das BM-SC ist weiter so ausgebildet, dass es unter Verwendung des ursprünglichen MBMS-Trägerdienstes zum Herunterladen der Datei ein Mehrfachsenden (Multicasting) des Reparaturblocks an die Benutzergeräte entsprechend der Datenstruktur durchführt; die anderen Netzwerkknoten sind weiter so ausgebildet, dass sie den Reparaturblock an die Benutzergeräte entsprechend der Datenstruktur weitersenden.

5. UMTS-Netzwerk nach Anspruch 4, wobei jeder der Netzwerkknoten weiter so ausgebildet ist, dass er die einem der Benutzergeräte zugehörigen Datenstruktur nach der Bewegung des jeweiligen Benutzergerätes in einen anderen Routingbereich durch eine Routingbereich-Aktualisierungsprozedur aktualisiert.

6. UMTS-Netzwerk nach Anspruch 5, wobei jeder der Netzwerkknoten weiter so ausgebildet ist, dass er bestimmt, ob die in dem jeweiligen Netzwerkknoten gespeicherte Datenstruktur aktualisiert werden muss oder nicht, entsprechend den in der Unterebenen-Datenstruktur des jeweiligen Netzwerkknotens gespeicherten Identifikationscodes der nachgelagerten Benutzergeräte.

7. Verfahren zur Dateireparatur für den Multimedia Broadcast Multicast Service MBMS, das auf ein Universal Mobile Telecommunications System UMTS-Netzwerk anwendbar ist, das eine Mehrzahl von Netzwerkknoten aufweist, wobei jeder der Netzwerkknoten ein Broadcast Multicast-Service Center BM-SC, ein Gateway GPRS Support Node GGSN, ein Serving GPRS Support Node SGSN oder ein Radio Network Controller RNC (Funknetzwerk-Steuereinrichtung) ist; wobei das Verfahren die folgenden Schritte umfasst:
Speichern eines MBMS UE-Kontextes in jedem der Netzwerkknoten während einer MBMS Multicast Service-Aktivierungsprozedur;
Senden von Reparaturanfragemeldungen durch eine Mehrzahl von Benutzergeräten an das BM-SC über die anderen Netzwerkknoten nach Herunterladen einer Datei, wobei die Reparaturanfragemeldungen einen Identifikationscode eines zur Reparatur der Datei benötigten Reparaturblocks und Identifikationscodes der Benutzergeräte aufweisen;
wenn die RNCs die Reparaturanfragemeldungen an die SGSNs weiterleiten, Einholen der Identifikationscodes des Reparaturblocks und der durch den jeweiligen RNC bedienten Benutzergeräte direkt aus den Reparaturanfragemeldungen durch jeden der RNCs, Aufbauen und Speichern einer Datenstruktur, die eine dem Reparaturblock zugeordnete Unterebenen-Datenstruktur aufweist, durch jeden der RNCs, wobei die Unterebenen-Datenstruktur die Identifikationscodes des Reparaturblocks und der durch den jeweiligen RNC bedienten Benutzergeräte aufweist;
wenn die SGSNs die Reparaturanfragemeldungen an die GGSNs weiterleiten, Einholen der Identifikationscodes des Reparaturblocks und der durch den jeweiligen SGSN bedienten Benutzergeräte direkt aus den Reparaturanfragemeldungen durch jeden der SGSNs, Bestimmen durch jeden der SGSNs, in welchem Routingbereich sich jedes der nachgelagerten Benutzergeräte des jeweiligen SGSN befindet, indem der im jeweiligen SGSN gespeicherte MBMS UE-Kontext entsprechend den Identifikationscodes der nachgelagerten Benutzergeräte durchsucht wird, Aufbauen und Speichern einer Datenstruktur, die eine dem Reparaturblock zugeordnete Unterebenen-Datenstruktur aufweist, durch jeden der SGSNs, wobei die Unterebenen-Datenstruktur die Identifikationscodes des Reparaturblocks und der nachgelagerten Routingbereiche des jeweiligen SGSN aufweist;
wenn die GGSNs die Reparaturanfragemeldungen an das BM-SC weiterleiten, Einholen der Identifikationscodes des Reparaturblocks und der durch den jeweiligen GGSN bedienten Benutzergeräte direkt aus den Reparaturanfragemeldungen durch jeden der GGSNs, Bestimmen durch jeden der GGSNs, welcher der SGSNs jedes der nachgelagerten Benutzergeräte des jeweiligen GGSN bedient, indem der im jeweiligen GGSN gespeicherte MBMS UE-Kontext entsprechend den Identifikationscodes der nachgelagerten Benutzergeräte durchsucht wird, Aufbauen und Speichern einer Datenstruktur, die eine dem Reparaturblock zugeordnete Unterebenen-Datenstruktur aufweist, durch jeden der GGSNs, wobei die Unterebenen-Datenstruktur die Identifikationscodes des Reparaturblocks und der nachgelagerten SGSNs des jeweiligen GGSN aufweist;
Einholen der Identifikationscodes des Reparaturblocks und der Benutzergeräte aus den Reparaturanfragemeldungen durch das BM-SC;
Bestimmen durch das BM-SC, welcher der GGSNs jedes der Benutzergeräte bedient, indem der im BM-SC gespeicherte MBMS UE-Kontext entsprechend den Identifikationscodes der Benutzergeräte durchsucht wird;
Aufbauen und Speichern einer Datenstruktur, die eine dem Reparaturblock zugeordnete Unterebenen-Datenstruktur aufweist, durch das BM-SC, wobei die Unterebenen-Datenstruktur die Identifikationscodes des Reparaturblocks und der GGSNs aufweist;
Senden einer Reparaturantwortmeldung an jedes der Benutzergeräte durch das BM-SC, wobei die Reparaturantwortmeldung eine Adresse einer Sitzungsbeschreibung eines ursprünglichen MBMS-Trägerdienstes zum Herunterladen der Datei aufweist; und
Mehrfachsenden (Multicasting) des Reparaturblocks vom BM-SC an die Benutzergeräte über die anderen Netzwerkknoten entsprechend der in jedem der Netzwerkknoten gespeicherten Datenstruktur unter Verwendung des ursprünglichen MBMS-Trägerdienstes zum Herunterladen der Datei.

8. Universal Mobile Telecommunications System UMTS-Netzwerk, das eine Mehrzahl von Netzwerkknoten aufweist, wobei jeder der Netzwerkknoten ein Broadcast Multicast-Service Center BM-SC, ein Gateway GPRS Support Node GGSN, ein Serving GPRS Support Node SGSN oder ein Radio Network Controller RNC (Funknetzwerk-Steuereinrichtung) ist;
jeder der Netzwerkknoten ist so ausgebildet, dass er einen MBMS UE-Kontext während einer MBMS Multicast Service-Aktivierungsprozedur speichert;
die RNCs sind weiter so ausgebildet, dass sie eine Mehrzahl von Reparaturanfragemeldungen über die SGSNs und die GGSNs an das BM-SC weiterleiten, wobei die Reparaturanfragemeldungen von einer Mehrzahl von Benutzergeräten nach Herunterladen einer Datei gesendet werden, und die Reparaturanfragemeldungen einen Identifikationscode eines zur Reparatur der Datei benötigten Reparaturblocks und Identifikationscodes der Benutzergeräte aufweisen;
jeder der RNCs ist weiter so ausgebildet, dass er die Identifikationscodes des Reparaturblocks und der durch den jeweiligen RNC bedienten Benutzergeräte direkt aus den Reparaturanfragemeldungen einholt, wenn die Reparaturanfragemeldungen an den SGSN weitergeleitet werden;
jeder der RNCs ist weiter so aufgebaut, dass er eine Datenstruktur aufbaut und speichert, die eine dem Reparaturblock zugeordnete Unterebenen-Datenstruktur aufweist, wobei die Unterebenen-Datenstruktur die Identifikationscodes des Reparaturblocks und der durch den jeweiligen RNC bedienten Benutzergeräte aufweist;
jeder der SGSNs ist weiter so ausgebildet, dass er die Identifikationscodes des Reparaturblocks und der durch den jeweiligen SGSN bedienten Benutzergeräte direkt aus den Reparaturanfragemeldungen einholt, wenn die Reparaturanfragemeldungen an die GGSNs weitergeleitet werden;
jeder der SGSNs ist weiter so ausgebildet, dass er bestimmt, in welchem Routingbereich sich jedes der nachgelagerten Benutzergeräte des jeweiligen SGSN befindet, indem der im jeweiligen SGSN gespeicherte MBMS UE-Kontext entsprechend den Identifikationscodes der nachgelagerten Benutzergeräte durchsucht wird;
jeder der SGSNs ist weiter so ausgebildet, dass er eine Datenstruktur aufbaut und speichert, die eine dem Reparaturblock zugeordnete Unterebenen-Datenstruktur aufweist, wobei die Unterebenen-Datenstruktur die Identifikationscodes des Reparaturblocks und der nachgelagerten Routingbereiche des jeweiligen SGSN aufweist;
jeder der GGSNs ist weiter so ausgebildet, dass er die Identifikationscodes des Reparaturblocks und der durch den jeweiligen GGSN bedienten Benutzergeräte direkt aus den Reparaturanfragemeldungen einholt, wenn die Reparaturanfragemeldungen an das BM-SC weitergeleitet werden;
jeder der GGSNs ist weiter so ausgebildet, dass er bestimmt, welcher der SGSNs jedes der nachgelagerten Benutzergeräte des jeweiligen GGSN bedient, indem der im jeweiligen GGSN gespeicherte MBMS UE-Kontext entsprechend den Identifikationscodes der nachgelagerten Benutzergeräte durchsucht wird;
jeder der GGSNs ist weiter so ausgebildet, dass er eine Datenstruktur aufbaut und speichert, die eine dem Reparaturblock zugeordnete Unterebenen-Datenstruktur aufweist, wobei die Unterebenen-Datenstruktur die Identifikationscodes des Reparaturblocks und der nachgelagerten SGSNs des jeweiligen GGSN aufweist;
das BM-SC ist weiter so ausgebildet, dass es die Identifikationscodes des Reparaturblocks und der Benutzergeräte aus den Reparaturanfragemeldungen einholt und bestimmt, welcher der GGSNs jedes der Benutzergeräte bedient, indem der im BM-SC gespeicherte MBMS UE-Kontext entsprechend den Identifikationscodes der Benutzergeräte durchsucht wird;
das BM-SC ist weiter so ausgebildet, dass es eine Datenstruktur aufbaut und speichert, die eine dem Reparaturblock zugeordnete Unterebenen-Datenstruktur aufweist, wobei die Unterebenen-Datenstruktur die Identifikationscodes des Reparaturblocks und der GGSNs aufweist;
das BM-SC ist weiter so ausgebildet, dass es eine Reparaturantwortmeldung an jedes der Benutzergeräte sendet, wobei die Reparaturantwortmeldung eine Adresse einer Sitzungsbeschreibung eines ursprünglichen MBMS-Trägerdienstes zum Herunterladen der Datei aufweist;
das BM-SC ist weiter so ausgebildet, dass es ein Mehrfachsenden (Multicasting) des Reparaturblocks an die Benutzergeräte über die anderen Netzwerkknoten entsprechend der in jedem der Netzwerkknoten gespeicherten Datenstruktur unter Verwendung des ursprünglichen MBMS-Trägerdienstes zum Herunterladen der Datei durchführt.

## Revendications

1. Méthode de réparation de fichier pour service MBMS (Multimedia Broadcast Multicast Service), applicable à un réseau UMTS (Universal Mobile Telecommunications System) comprenant une pluralité de noeuds de réseau, dans lequel chacun des noeuds de réseau est un centre BM-SC (Broadcast Multicast-Service Center), un noeud GGSN (Gateway GPRS Support Node), un noeud SGSN (Serving GPRS Support Node) ou un contrôleur de réseau radio RNC (Radio Network Controller) ; la méthode comprenant :
le stockage d'un contexte MBMS UE dans chacun des noeuds de réseau pendant une procédure d'activation de service de multidiffusion MBMS ;
une pluralité d'équipements utilisateur qui émettent des messages de requête de réparation au BM-SC à travers les autres noeuds de réseau après le téléchargement d'un fichier (610, 630), étant donné que les messages de requête de réparation comprennent un code d'identification d'un bloc de réparation requis pour la réparation du fichier et des codes d'identification des équipements utilisateur ;
la transmission par le BM-SC d'un message de réponse de réparation à chacun des équipements utilisateur (620, 640), étant donné que le message de réponse de réparation comprend une adresse d'une description de session d'un service support MBMS original pour le téléchargement du fichier ;
la collecte par le BM-SC des codes d'identification du bloc de réparation et des équipements utilisateur des messages de requête de réparation ;
la détermination par le BM-SC du GGSN qui dessert chacun des équipements utilisateur en scrutant le contexte MBMS UE stocké dans le BM-SC conformément aux codes d'identification des équipements utilisateur ;
la catégorisation par le BM-SC des équipements utilisateur conformément aux GGSNs ;
l'établissement (710) et le stockage (810) par le BM-SC d'une structure de données comprenant une structure de données de sous-niveau correspondant au bloc de réparation, étant donné que la structure de données de sous-niveau comprend les codes d'identification du bloc de réparation, les GGSNs et les équipements utilisateurs desservis par chacun des GGSNs ;
la transmission (720) par le BM-SC des codes d'identification du bloc de réparation et des équipements utilisateur à chacun des GGSNs, étant donné que chacun des GGSNs reçoit les codes d'identification des équipements utilisateur desservis par le GGSN spécifié ;
la détermination par chacun des GGSNs du SGSN qui dessert chacun des équipements utilisateur aval du GGSN spécifié en scrutant le contexte MBMS UE stocké dans le GGSN spécifié conformément aux codes d'identification des équipements utilisateur aval ;
la catégorisation par chacun des GGSNs des équipements utilisateur aval conformément aux SGSNs ;
l'établissement (730) et le stockage (820) par chacun des GGSNs d'une structure de données comprenant une structure de données de sous-niveau correspondant au bloc de réparation, étant donné que la structure de données de sous-niveau comprend les codes d'identification du bloc de réparation, les SGSNs aval du GGSN spécifié et les équipements utilisateurs aval desservis par chacun des SGSNs aval ;
la transmission (740) par chacun des GGSNs des codes d'identification du bloc de réparation et des équipements utilisateur desservis par le GGSN spécifié aux SGSNs aval du GGSN spécifié, étant donné que chacun des SGSNs aval reçoit les codes d'identification des équipements utilisateur desservis par le SGSN aval spécifié ;
la détermination par chacun des SGSNs de la zone de routage dans laquelle se trouve chacun des équipements utilisateur aval du SGSN spécifié en scrutant le contexte MBMS UE stocké dans le SGSN spécifié conformément aux codes d'identification des équipements utilisateur aval ;
la catégorisation par chacun des SGSNs des équipements utilisateur aval conformément aux zones de routage ;
l'établissement (750) et le stockage (830, 850) par chacun des SGSNs d'une structure de données comprenant une structure de données de sous-niveau correspondant au bloc de réparation, étant donné que la structure de données de sous-niveau comprend les codes d'identification du bloc de réparation, les zones de routage aval du SGSN spécifié et les équipements utilisateurs aval desservis dans chacune des zones de routage aval ;
la transmission par chacun des SGSNs des codes d'identification du bloc de réparation et des équipements utilisateur desservis par le SGSN spécifié aux RNCs aval du SGSN spécifié, étant donné que chacun des RNCs aval reçoit les codes d'identification des équipements utilisateur desservis par le RNC aval spécifié ;
l'établissement et le stockage (840, 860) par chacun des RNCs d'une structure de données comprenant une structure de données de sous-niveau correspondant au bloc de réparation, étant donné que la structure de données de sous-niveau comprend les codes d'identification du bloc de réparation et les équipements utilisateurs desservis par le RNC spécifié ; et
la multidiffusion par le BM-SC du bloc de réparation aux équipements utilisateur via les autres noeuds de réseau conformément à la structure de données stockée dans chacun des noeuds de réseau, utilisant le service support MBMS original pour le téléchargement du fichier.

2. Méthode de réparation de fichier selon la revendication 1, comprenant en outre :
lorsqu'un des équipements utilisateur passe à une autre zone de routage, l'actualisation de la structure de données en rapport avec l'équipement utilisateur dans chacun des noeuds de réseau après le passage de l'équipement utilisateur à travers une procédure d'actualisation de zone de routage (Routing Area Update).

3. Méthode de réparation de fichier selon la revendication 2, dans laquelle l'étape d'actualisation de la structure de données comprend :
la détermination de la structure de données stockée dans les noeuds de réseau qui doit être actualisée conformément aux codes d'identification des équipements utilisateur aval de chacun des noeuds de réseau stockés dans les structures de données de sous-niveau.

4. Réseau UMTS (Universal Mobile Telecommunications System) comprenant une pluralité de noeuds de réseau, dans lequel chacun des noeuds de réseau est un centre BM-SC (Broadcast Multicast-Service Center), un noeud GGSN (Gateway GPRS Support Node), un noeud SGSN (Serving GPRS Support Node) ou un contrôleur de réseau radio RNC (Radio Network Controller) ;
chacun des noeuds de réseau est adapté de manière à stocker un contexte MBMS UE pendant une procédure d'activation de service de multidiffusion MBMS;
le BM-SC est adapté de manière à recevoir des messages de requête de réparation (610, 630) d'une pluralité d'équipements utilisateur et les autres noeuds de réseau sont adaptés de manière à acheminer les messages de requête de réparation des équipements utilisateur au BM-SC, étant donné que les messages de requête de réparation sont transmis par les équipements utilisateur après que les équipements utilisateur ont téléchargé un fichier et les messages de requête de réparation comprennent un code d'identification du bloc de réparation requis pour la réparation du fichier et des codes d'identification des équipements utilisateur ;
le BM-SC est en outre adapté de manière à transmettre un message de réponse de réparation (620, 640) à chacun des équipements utilisateur, étant donné que le message de réponse de réparation comprend une adresse d'une description de session d'un service support MBMS original pour le téléchargement du fichier ;
le BM-SC est en outre adapté de manière à collecter les codes d'identification du bloc de réparation et les équipements utilisateur dans les messages de requête de réparation ;
le BM-SC est en outre adapté de manière à déterminer le GGSN qui dessert chacun des équipements utilisateur en scrutant le contexte MBMS UE stocké dans le BM-SC conformément aux codes d'identification des équipements utilisateur ;
le BM-SC est en outre adapté de manière à catégoriser les équipements utilisateur conformément aux GGSNs ;
le BM-SC est en outre adapté de manière à établir (710) et stocker (810) une structure de données comprenant une structure de données de sous-niveau correspondant au bloc de réparation, étant donné que la structure de données de sous-niveau comprend les codes d'identification du bloc de réparation, les GGSNs et les équipements utilisateurs desservis par chacun des GGSNs ;
le BM-SC est en outre adapté de manière à transmettre (720) les codes d'identification du bloc de réparation et des équipements utilisateur à chacun des GGSNs, étant donné que chacun des GGSNs reçoit les codes d'identification des équipements utilisateur desservis par le GGSN spécifié ;
chacun des GGSNs est en outre adapté de manière à déterminer le SGSN qui dessert chacun des équipements utilisateur aval du GGSN spécifié en scrutant le contexte MBMS UE stocké dans le GGSN spécifié conformément aux codes d'identification des équipements utilisateur aval ;
chacun des GGSNs est en outre adapté de manière à catégoriser les équipements utilisateur aval conformément aux SGSNs ;
chacun des GGSNs est en outre adapté de manière à établir (730) et stocker (820) une structure de données comprenant une structure de données de sous-niveau correspondant au bloc de réparation, étant donné que la structure de données de sous-niveau comprend les codes d'identification du bloc de réparation, les SGSNs aval du GGSN spécifié et les équipements utilisateurs aval desservis par chacun des SGSNs aval ;
chacun des GGSNs est en outre adapté de manière à transmettre (740) les codes d'identification du bloc de réparation et des équipements utilisateur desservis par le GGSN spécifié aux SGSNs aval du GGSN spécifié, étant donné que chacun des SGSNs aval reçoit les codes d'identification des équipements utilisateur desservis par le SGSN aval spécifié ;
chacun des SGSNs est en outre adapté de manière à déterminer la zone de routage dans laquelle se trouve chacun des équipements utilisateur aval du SGSN spécifié en scrutant le contexte MBMS UE stocké dans le SGSN spécifié conformément aux codes d'identification des équipements utilisateur aval ;
chacun des SGSNs est en outre adapté de manière à catégoriser les équipements utilisateur aval conformément aux zones de routage ;
chacun des SGSNs est en outre adapté de manière à établir (750) et stocker (830, 850) une structure de données comprenant une structure de données de sous-niveau correspondant au bloc de réparation, étant donné que la structure de données de sous-niveau comprend les codes d'identification du bloc de réparation, les zones de routage aval du SGSN spécifié et les équipements utilisateurs aval desservis dans chacune des zones de routage aval ;
chacun des SGSNs est en outre adapté de manière à transmettre les codes d'identification du bloc de réparation et des équipements utilisateur desservis par le SGSN spécifié aux RNCs aval du SGSN spécifié, étant donné que chacun des RNCs aval reçoit les codes d'identification des équipements utilisateur desservis par le RNC aval spécifié ;
chacun des RNCs est en outre adapté de manière à établir et stocker (840, 860) une structure de données comprenant une structure de données de sous-niveau correspondant au bloc de réparation, étant donné que la structure de données de sous-niveau comprend les codes d'identification du bloc de réparation et les équipements utilisateurs desservis par le RNC spécifié ; et
le BM-SC est en outre adapté de manière à multidiffuser le bloc de réparation aux équipements utilisateur conformément à la structure de données, utilisant le service support MBMS original pour télécharger le fichier ; les autres noeuds de réseau sont en outre adaptés de manière à acheminer le bloc de réparation aux équipements utilisateur conformément à la structure de données.

5. Réseau UMTS selon la revendication 4, dans lequel chacun des noeuds de réseau est en outre adapté de manière à actualiser la structure de données en rapport avec un des équipements utilisateur après le passage de l'équipement utilisateur spécifié à une autre zone de routage à travers une procédure RAU (Routing Area Update).

6. Réseau UMTS selon la revendication 5, dans lequel chacun des noeuds de réseau est en outre adapté de manière à déterminer si la structure de données stockée dans le noeud de réseau spécifié doit être actualisée ou non conformément aux codes d'identification des équipements utilisateur aval stockés dans la structure de données de sous-niveau du noeud de réseau spécifié.

7. Méthode de réparation de fichier pour service MBMS (Multimedia Broadcast Multicast Service), applicable à un réseau UMTS (Universal Mobile Telecommunications System) comprenant une pluralité de noeuds de réseau, dans lequel chacun des noeuds de réseau est un centre BM-SC (Broadcast Multicast-Service Center), un noeud GGSN (Gateway GPRS Support Node), un noeud SGSN (Serving GPRS Support Node) ou un contrôleur de réseau radio RNC (Radio Network Controller) ; la méthode comprenant :
le stockage d'un contexte MBMS UE dans chacun des noeuds de réseau pendant une procédure d'activation de service de multidiffusion MBMS ;
une pluralité d'équipements utilisateur qui émettent des messages de requête de réparation au BM-SC à travers les autres noeuds de réseau après le téléchargement d'un fichier, étant donné que les messages de requête de réparation comprennent un code d'identification d'un bloc de réparation requis pour la réparation du fichier et des codes d'identification des équipements utilisateur ;
lorsque les RNCs acheminent les messages de requête de réparation aux SGSNs, collecte par chacun des RNCs des codes d'identification du bloc de réparation et des équipements utilisateur desservis par le RNC spécifié directement dans les messages de requête de réparation, établissement et stockage par chacun des RNCs d'une structure de données comprenant une structure de données de sous-niveau correspondant au bloc de réparation, étant donné que la structure de données de sous-niveau comprend les codes d'identification du bloc de réparation et les équipements utilisateur desservis par le RNC spécifié.
lorsque les SGSNs acheminent les messages de requête de réparation aux GGSNs, collecte par chacun des SGSNs des codes d'identification du bloc de réparation et des équipements utilisateur desservis par le SGSN spécifié directement dans les messages de requête de réparation, chacun des SGSNs déterminant dans quelle zone de routage est situé chacun des équipements utilisateur aval du SGSN spécifié en scrutant le contexte MBMS UE stocké dans le SGSN spécifié conformément aux codes d'identification des équipements utilisateur aval, établissement et stockage par chacun des SGSNs d'une structure de données comprenant une structure de données de sous-niveau correspondant au bloc de réparation, étant donné que la structure de données de sous-niveau comprend les codes d'identification du bloc de réparation et les équipements utilisateur desservis par le SGSN spécifié ;
lorsque les GGSNs acheminent les messages de requête de réparation au BM-SC, collecte par chacun des GGSNs des codes d'identification du bloc de réparation et des équipements utilisateur desservis par le GGSN spécifié directement dans les messages de requête de réparation, chacun des GGSNs déterminant quel SGSN dessert chacun des équipements utilisateur aval du GGSN spécifié en scrutant le contexte MBMS UE stocké dans le GGSN spécifié conformément aux codes d'identification des équipements utilisateur aval, établissement et stockage par chacun des GGSNs d'une structure de données comprenant une structure de données de sous-niveau correspondant au bloc de réparation, étant donné que la structure de données de sous-niveau comprend les codes d'identification du bloc de réparation et les SGSNs aval du GGSN spécifié ;
la collecte par le BM-SC des codes d'identification du bloc de réparation et des équipements utilisateur des messages de requête de réparation ;
la détermination par le BM-SC du GGSN qui dessert chacun des équipements utilisateur en scrutant le contexte MBMS UE stocké dans le BM-SC conformément aux codes d'identification des équipements utilisateur ;
l'établissement et le stockage par le BM-SC d'une structure de données comprenant une structure de données de sous-niveau correspondant au bloc de réparation, étant donné que la structure de données de sous-niveau comprend les codes d'identification du bloc de réparation et les GGSNs ;
la transmission par le BM-SC d'un message de réponse de réparation à chacun des équipements utilisateur, étant donné que le message de réponse de réparation comprend une adresse d'une description de session d'un service support MBMS original pour le téléchargement du fichier ; et
la multidiffusion par le BM-SC du bloc de réparation aux équipements utilisateur via les autres noeuds de réseau conformément à la structure de données stockée dans chacun des noeuds de réseau, utilisant le service support MBMS pour le téléchargement du fichier.

8. Réseau UMTS (Universal Mobile Telecommunications System) comprenant une pluralité de noeuds de réseau, dans lequel chacun des noeuds de réseau est un centre BM-SC (Broadcast Multicast-Service Center), un noeud GGSN (Gateway GPRS Support Node), un noeud SGSN (Serving GPRS Support Node) ou un contrôleur de réseau radio RNC (Radio Network Controller) ;
chacun des noeuds de réseau est adapté de manière à stocker un contexte MBMS UE pendant une procédure d'activation de service de multidiffusion MBMS;
les RNCs sont en outre adaptés de manière à acheminer une pluralité de messages de requête de réparation via les SGSNs et les GGSNs au BM-SC, étant donné que les messages de requête de réparation sont transmis par une pluralité d'équipements utilisateur après que le téléchargement d'un fichier, les messages de requête de réparation comprennent un code d'identification d'un bloc de réparation requis pour la réparation du fichier et des codes d'identification des équipements utilisateur ;
chacun des RNCs est en outre adapté de manière à collecter les codes d'identification du bloc de réparation et des équipements utilisateur desservis par le RNC spécifié directement dans les messages de requête de réparation lors de l'acheminement des messages de requête de réparation au SGSN ;
chacun des RNCs est en outre adapté de manière à établir et stocker une structure de données comprenant une structure de données de sous-niveau correspondant au bloc de réparation, étant donné que la structure de données de sous-niveau comprend les codes d'identification du bloc de réparation et les équipements utilisateurs desservis par le RNC spécifié ;
chacun des SGSNs est en outre adapté de manière à collecter les codes d'identification du bloc de réparation et des équipements utilisateur desservis par le SGSN spécifié directement dans les messages de requête de réparation lors de l'acheminement des messages de requête de réparation aux GGSNs ;
chacun des SGSNs est en outre adapté de manière à déterminer la zone de routage dans laquelle se trouve chacun des équipements utilisateur aval du SGSN spécifié en scrutant le contexte MBMS UE stocké dans le SGSN spécifié conformément aux codes d'identification des équipements utilisateur aval ;
chacun des SGSNs est en outre adapté de manière à établir et stocker une structure de données comprenant une structure de données de sous-niveau correspondant au bloc de réparation, étant donné que la structure de données de sous-niveau comprend les codes d'identification du bloc de réparation et les zones de routage aval du SGSN spécifié ;
chacun des GGSNs est en outre adapté de manière à collecter les codes d'identification du bloc de réparation et des équipements utilisateur desservis par le GGSN spécifié directement dans les messages de requête de réparation lors de l'acheminement des messages de requête de réparation au BM-SC ;
chacun des GGSNs est en outre adapté de manière à déterminer le SGSN qui dessert chacun des équipements utilisateur aval du GGSN spécifié en scrutant le contexte MBMS UE stocké dans le GGSN spécifié conformément aux codes d'identification des équipements utilisateur aval ;
chacun des GGSNs est en outre adapté de manière à établir et stocker une structure de données comprenant une structure de données de sous-niveau correspondant au bloc de réparation, étant donné que la structure de données de sous-niveau comprend les codes d'identification du bloc de réparation et les SGSNs aval du GGSN spécifié ;
le BM-SC est en outre adapté de manière à collecter les codes d'identification du bloc de réparation et des équipements utilisateur dans les messages de requête de réparation, et à déterminer le GGSN qui dessert chacun des équipements utilisateur en scrutant le contexte MBMS UE stocké dans le BM-SC conformément aux codes d'identification des équipements utilisateur ;
le BM-SC est en outre adapté de manière à établir et stocker une structure de données comprenant une structure de données de sous-niveau correspondant au bloc de réparation, étant donné que la structure de données de sous-niveau comprend les codes d'identification du bloc de réparation et les GGSNs ;
le BM-SC est en outre adapté de manière à transmettre un message de réponse de réparation à chacun des équipements utilisateur, étant donné que le message de réponse de réparation comprend une adresse d'une description de session d'un service support MBMS original pour le téléchargement du fichier ;
le BM-SC est en outre adapté de manière à multidiffuser le bloc de réparation aux équipements utilisateur via les autres noeuds de réseau conformément à la structure de données stockée dans chacun des noeuds de réseau, utilisant le service support MBMS original pour le téléchargement du fichier.
